# EUROPÄISCHE PATENTSCHRIFT

(11) **EP 4 166 235 B1**
(45) Veröffentlichungstag und Bekanntmachung des Hinweises auf die Patenterteilung: **29.04.2026**
(21) Anmeldenummer: 22200090.3
(22) Anmeldetag: 06.10.2022
(51) Int. Cl.: B04C 5/15, B04C 5/18, B04C 5/185, B04C 11/00, B04C 9/00

(54) **ZYKLONABSCHEIDER INSBESONDERE FÜR EINE PULVERRÜCKGEWINNUNGSVORRICHTUNG EINER PULVERBESCHICHTUNGSANLAGE**
CYCLONIC SEPARATOR, IN PARTICULAR FOR A POWDER RECOVERY DEVICE OF A POWDER COATING INSTALLATION
SÉPARATEUR CYCLONIQUE, EN PARTICULIER POUR UN DISPOSITIF DE RÉCUPÉRATION DE POUDRE D'UNE INSTALLATION DE REVÊTEMENT PAR POUDRAGE

(30) Priorität: 11.10.2021 DE 102021126241
(43) Veröffentlichungstag der Anmeldung: 19.04.2023
(73) Patentinhaber: Gema Switzerland GmbH, 9200 Gossau (CH)
(72) Erfinder: Peter, Steiger, 9200 Gossau (CH); Thomas, Studerus, 9032 Engelburg (CH)
(74) Vertreter: Meissner Bolte Partnerschaft mbB

(56) Entgegenhaltungen:
- DE-U1- 20 120 247
- US-A1- 2015 020 732

## Beschreibung

Die Erfindung betrifft einen Zyklonabscheider insbesondere für eine Pulverrückgewinnungsvorrichtung einer Pulverbeschichtungsanlage sowie eine Pulverrückgewinnungsvorrichtung für eine Pulverbeschichtungsanlage, wobei die Pulverrückgewinnungsvorrichtung mindestens einen Zyklonabscheider aufweist.

Aus dem Fachgebiet der Abgasreinigung sind Zyklonabscheider allgemein bekannt und dienen zur Absonderung von beispielsweise in einem Pulver-Luft-Gemischstrom enthaltenen festen Partikeln. Bei einem Zyklonabscheider wird der zu behandelnde Gemischstrom im Gegensatz zu einer Zentrifuge durch seine eigene Strömungsgeschwindigkeit und eine entsprechende konstruktive Gestaltung des Abscheiders in eine Drehbewegung versetzt. Die auf die Pulverpartikel des Gemischstroms wirkenden Zentrifugalkräfte beschleunigen diese radial nach außen und werden dadurch vom Gasstrom getrennt, der im Zyklonabscheider nach innen geleitet und abgeführt wird.

Ein Zyklonabscheider besteht im Wesentlichen aus einem Einlaufbereich beispielsweise in Gestalt eines zylindrischen Behälters, wobei sich unterhalb des Einlaufbereichs ein Abscheidebereich mit einem konischen Endbereich befindet, in welchem die Fliehkraftabscheidung von zumindest einem Teil des im Gemischstrom enthaltenen Pulvers erfolgt. Dem Einlaufbereich des Zyklonabscheiders wird der zu behandelnde Pulver-Luft-Gemischstrom tangential zugeführt. Hierfür sind verschiedene Einlaufgeometrien denkbar, wie beispielsweise ein Spiraleinlauf, ein Tangentialeinlauf, ein Wendeleinlauf oder ein Axialeinlauf.

Durch die Einlaufgeometrien wird eine Drehströmung des Gemischstroms im Inneren des Zyklonabscheiders erzeugt. Durch die sich ausbildende Wirbelströmung sedimentieren die aus dem Gemischstrom abzuschaltenden Pulverpartikel in Folge der auf sie wirkenden Zentrifugalkräfte zur äußeren Wand des Abscheidebereichs und werden mit der Wandgrenzschichtströmung in spiralförmigen Bahnen entlang des am unteren Endbereich des Abscheidebereichs ausgebildeten Konus nach unten in einen Pulversammelbereich gefördert. Die Gasströmung wird dadurch gezwungen, nach oben umzukehren. Das Gas verlässt den Zyklonabscheider in Form einer Radialströmung von außen nach innen und strömt durch ein so genanntes Tauchrohr am Kopfbereich des Zyklonabscheiders nach oben. Das Tauchrohr ist ein wichtiges Bauteil des Zyklonabscheiders, da dessen Durchmesser die im Zyklonabscheider auftretende Zentrifugalkraft und damit die Abscheideleistung sowie den Druckverlust bestimmt. Die anderen Abmessungen der Bereiche des Zyklonabscheiders werden dem Tauchrohr angepasst.

Die Bauformen von Zyklonabscheidern unterscheiden sich im Wesentlichen durch die Einlaufgeometrien. Die gebräuchlichsten Einlaufgeometrien sind der Spiraleinlauf sowie der Tangentialeinlauf, auch Schlitzeinlauf genannt. Da beide von der Abscheideleistung her gleichwertig sind, wird häufig dem einfacheren Tangentialeinlauf der Vorzug gegeben. Der Axialeinlauf ist aus Platzgründen teilweise bauseits erforderlich. Er eignet sich insbesondere für große Gasdurchsätze bei etwas geringeren Abscheideleistungen.

Ein Zyklonabscheider der zuvor genannten Art ist beispielsweise aus der Druckschrift DE 10 2007 005 312 A1 bekannt. Der aus diesem Stand der Technik bekannte Zyklonabscheider dient zum Abscheiden von Beschichtungspulver aus einem Pulver-Luft-Gemischstrom. Dabei ist vorgesehen, dass das in dem Abscheidebereich des Zyklonabscheiders abgeschiedene Pulver wieder einer Pulversprühbeschichtungsanlage als Rückgewinnungspulver zugeführt wird. Bevor das aus dem Pulver-Luft-Gemischstrom abgeschiedene und somit rückgewonnene Pulver als Rückgewinnungspulver in einer Pulverbeschichtungsanlage - entweder rein oder mit Frischpulver vermischt - wiederverwendet werden kann, ist unter Umständen eine Aufbereitung des Rückgewinnungspulvers erforderlich, damit dieses eine ausreichend gute Qualität aufweist. Hierzu gehört unter anderem auch das Sieben des Rückgewinnungspulvers in einer Siebvorrichtung, um von dem rückgewonnenen Beschichtungspulver grobkörnige Verunreinigungen abtrennen zu können.

Die Druckschrift US 2015/0020732 A1 betrifft allgemein Zyklonabscheider zur Pulverrückgewinnung, wie sie bei Pulverbeschichtungssystem verwendet werden können. Um bei einem Pulverwechsel den Zyklonabscheider leichter reinigen zu können, wird in diesem Stand der Technik vorgeschlagen, den Zyklonabscheider in mehrere Abschnitte einzuteilen. Im Einzelnen wird vorgeschlagen, den Zyklonabscheider in ein Zyklonoberteil und in ein Zyklonunterteil zu unterteilen, wobei diese beiden Teile durch ein Gelenk miteinander verbunden sind. Der untere Teil des Zyklonabscheiders ist relativ zu dem oberen Teil durch Bewegung um ein Gelenk schwenkbar. Auf diese Weise soll die Zugänglichkeit, die bei der Reinigung oder bei der Wartung des Zyklonabscheiders notwendig ist, verbessert werden.

Auch wenn in der US 2015/0020732 A1 bereits erkannt wurde, dass Pulverrückgewinnungsvorrichtungen einer Pulverbeschichtungsanlage und insbesondere Zyklonabscheider bei einem Pulverwechsel (Wechsel von einer Pulversorte auf eine andere Pulversorte), insbesondere bei einem Farbwechsel (Wechsel von Pulver einer ersten Farbe auf ein Pulver mit einer anderen, zweiten Farbe) sorgfältig gereinigt werden müssen, da bereits einige wenige Pulverpartikel der früheren Pulversorte Beschichtungsfehler bei der Beschichtung mit der neuen Pulversorte zur Folge haben können, besteht Bedarf nach einer weiteroptimierten Lösung des Zyklonabscheiders.

Insbesondere liegt somit der vorliegenden Erfindung die Aufgabe zu Grunde, ausgehend von einem Zyklonabscheider, wie er zumindest dem Prinzip nach aus der US 2015/0020732 A1 bekannt ist, eine Lösung anzugeben, mit welcher insbesondere das manuelle Reinigen des Pulverabscheiders insbesondere bei einem Pulverwechsel auf einfache Weise optimiert werden kann.

Diese Aufgabe wird durch den Gegenstand des unabhängigen Patentanspruchs 1 gelöst, der einen Zyklonabscheider insbesondere für eine Pulverrückgewinnungsvorrichtung einer Pulverbeschichtungsanlage betrifft. Vorteilhafte Weiterbildungen des erfindungsgemäßen Zyklonabscheiders sind in den abhängigen Ansprüchen 2 bis 14 angegeben, während der nebengeordnete Patentanspruch 15 eine Pulverrückgewinnungsvorrichtung einer Pulverbeschichtungsanlage betrifft, wobei diese Pulverrückgewinnungsvorrichtung mindestens einen Zyklonabscheider der erfindungsgemäßen Art aufweist.

Der erfindungsgemäße Zyklonabscheider weist insbesondere einen Einlaufbereich mit einem Einlass für einen Pulver-Luft-Gemischstrom, einen sich an dem unteren Endbereich des Einlaufbereichs anschließenden Abscheidebereich zur Fliehkraftabscheidung von zumindest einem Teil des im Gemischstrom enthaltenen Pulvers, und einen mit dem unteren Endbereich des Abscheidebereichs verbundenen oder verbindbaren Pulversammelbereich auf, um das in dem Abscheidebereich abgeschiedene Pulver sammeln zu können.

Um bei einem Pulverwechsel den Zyklonabscheider in einer leicht zu realisierenden aber dennoch effektiven Weise reinigen zu können, ist erfindungsgemäß insbesondere vorgesehen, dass der Pulversammelbereich relativ zu dem Abscheidebereich zwischen einer ersten Position, in welcher der Pulversammelbereich mit dem unteren Endbereich des Abscheidebereichs insbesondere fluchtend verbunden ist, und einer zweiten Position überführbar ist, in welcher der Pulversammelbereich nicht mit dem unteren Endbereich des Abscheidebereichs insbesondere fluchtend verbunden ist, und in welcher über den unteren Endbereich des Abscheidebereichs ein Zugang zum Inneren des Abscheidebereichs und/oder Einlaufbereichs des Zyklonabscheiders möglich ist.

Mit anderen Worten, in der zweiten Position des Pulversammelbereichs steht einer Person, die den Zyklonabscheider reinigen möchte, ein relativ großer Zugang zur Verfügung, über den beispielsweise Blasleisten einführbar sind, um die Innenwand des Zyklonabscheiders mit Druckluft abzublasen und entsprechend zu reinigen.

Erfindungsgemäß ist zusätzlich vorgesehen, dass der Zyklonabscheider ferner eine Beleuchtungsvorrichtung mit mindestens einer Lichtquelle aufweist, wobei die Beleuchtungsvorrichtung ausgebildet ist, mit Hilfe der mindestens einen Lichtquelle bedarfsweise zumindest Teilbereiche des Inneren des Abscheidebereichs und/oder des Einlaufbereichs des Zyklonabscheiders zu beleuchten oder auszuleuchten, und zwar insbesondere dann, wenn sich der Pulversammelbereich in seiner zweiten Position befindet.

Die durch das Vorsehen einer derartigen Beleuchtungsvorrichtung erzielbaren Vorteile liegen auf der Hand. Insbesondere gestattet die Beleuchtungsvorrichtung, dass bei der Reinigung des Zyklonabscheiders der zu reinigende Innenbereich des Zyklonabscheiders ausgeleuchtet ist, was dem Betreiber des Zyklonabscheiders eine einfache Möglichkeit zur Kontrolle der Sauberkeit des Zyklonabscheiders ermöglicht. Auf diese Weise kann die Innenreinigung des Zyklonabscheiders wesentlich effizienter durchgeführt werden, da eine aufgrund eines Pulverwechsels bedingte Stillstandzeit des Zyklonabscheiders deutlich reduziert werden kann.

Um eine Reinigung des Innenbereichs des Zyklonabscheiders noch effizienter gestalten zu können, ist gemäß Realisierungen des erfindungsgemäßen Zyklonabscheiders vorgesehen, dass die Beleuchtungsvorrichtung ausgebildet ist, dass die mindestens eine Lichtquelle der Beleuchtungsvorrichtung automatisch eingeschaltet wird und/oder manuell einschaltbar ist, wenn sich der Pulversammelbereich in seiner zweiten Position befindet oder in seine zweite Position überführt wird.

Alternativ oder zusätzlich hierzu ist vorgesehen, dass die Beleuchtungsvorrichtung ausgebildet ist, dass die mindestens eine Lichtquelle der Beleuchtungsvorrichtung automatisch ausgeschaltet wird und/oder manuell ausschaltbar ist, wenn sich der Pulversammelbereich in seiner ersten Position befindet bzw. wenn der Pulversammelbereich in seine erste Position überführt wird.

Durch das automatische Ein- und Ausschalten der mindestens einen Lichtquelle der Beleuchtungsvorrichtung wird erzielt, dass keine manuelle Aktivierung oder Deaktivierung der Beleuchtungsvorrichtung notwendig ist. Der Betreiber des Zyklonabscheiders kann sich somit vollständig auf den Reinigungsvorgang konzentrieren, was diesen letztendlich effizienter gestaltet.

In diesem Zusammenhang ist es denkbar, dass ein entsprechender Schalter am Pulversammelbereich angeordnet oder dem Pulversammelbereich zugeordnet ist, um zu detektieren, dass sich der Pulversammelbereich in der ersten oder zweiten Position befindet bzw. in die erste oder zweite Position überführt wird.

Zur Realisierung der Beleuchtungsvorrichtung kommen unterschiedliche Ausgestaltungen in Frage. So ist es beispielsweise denkbar, dass die mindestens eine Lichtquelle der Beleuchtungsvorrichtung außerhalb des Abscheidebereichs und außerhalb des Einlaufbereichs des Zyklonabscheiders angeordnet ist. Hierbei ist es insbesondere denkbar, dass die mindestens eine Lichtquelle der Beleuchtungsvorrichtung relativ zu dem Abscheidebereich und zu dem Einlaufbereich des Zyklonabscheiders fest installiert ist. Beispielsweise kann die mindestens eine Lichtquelle der Beleuchtungsvorrichtung an einem Gestell des Zyklonabscheiders oder am Boden unterhalb des Zyklonabscheiders angeordnet sein.

In diesem Zusammenhang bietet es sich an, dass die mindestens eine Lichtquelle derart bezüglich des Abscheidebereichs und des Einlaufbereichs des Zyklonabscheiders angeordnet und ausgerichtet ist, dass mindestens 50% und vorzugsweise mindestens 70% und noch bevorzugter mindestens 80% des von der mindestens einen Lichtquelle der Beleuchtungsvorrichtung emittierten Lichts zumindest in der zweiten Position des Pulversammelbereichs auf einen Innenwandbereich des Abscheidebereichs und/oder des Einlaufbereichs des Zyklonabscheiders auftrifft. Dies ist beispielsweise mit Hilfe einer der mindestens einen Lichtquelle der Beleuchtungsvorrichtung zugeordneten Optik realisierbar.

Alternativ oder zusätzlich zu der zuletzt genannten Ausgestaltung ist es denkbar, dass die mindestens eine Lichtquelle der Beleuchtungsvorrichtung oder mindestens eine Lichtquelle der Beleuchtungsvorrichtung innerhalb des Abscheidebereichs oder des Einlaufbereichs des Zyklonabscheiders angeordnet ist. Auch hier sollte die mindestens eine Lichtquelle derart bezüglich des Abscheidebereichs und bezüglich des Einlaufbereichs des Zyklonabscheiders angeordnet und ausgerichtet sein, dass mindestens 50% und vorzugsweise mindestens 70% und noch bevorzugter mindestens 80% des von der mindestens einen Lichtquelle der Beleuchtungsvorrichtung emittierten Lichts auf einen Innenwandbereich des Abscheidebereichs und/oder des Einlaufbereichs des Zyklonabscheiders auftrifft.

Selbstverständlich sind auch andere Positionierungen, Anordnungen und Ausrichtungen der mindestens einen Lichtquelle der Beleuchtungsvorrichtung denkbar.

In einer konkreten Ausgestaltung der erfindungsgemäßen Lösung ist vorgesehen, dass die Beleuchtungsvorrichtung des Zyklonabscheiders relativ zu dem Abscheidebereich des Zyklonabscheiders zwischen einer ersten Position, in welcher mit der mindestens einen Lichtquelle der Beleuchtungsvorrichtung über den unteren Endbereich des Abscheidebereichs zumindest teil- oder bereichsweise das Innere des Abscheidebereichs und/oder das Innere des Einlaufbereichs des Zyklonabscheiders be- oder ausleuchtbar ist, und einer zweiten Position überführbar ist, in welcher der Pulversammelbereich in seiner ersten Position vorliegt und ein zumindest teil- oder bereichsweises Be- oder Ausleuchten des Inneren des Abscheidebereichs und/oder des Inneren des Einlaufbereichs des Zyklonabscheiders mit Hilfe der mindestens einen Lichtquelle verhindert ist.

Bei dieser konkreten Ausgestaltung der Beleuchtungsvorrichtung kann insbesondere vorgesehen sein, dass diese quasi automatisch, d.h. ohne das Zutun des Betreibers des Zyklonabscheiders, im Reinigungsbetrieb des Zyklonabscheiders in ihre erste Position übergeht. Bei dieser ersten Position handelt es sich insbesondere um eine Position der Beleuchtungsvorrichtung, in welcher mit Hilfe der mindestens einen Lichtquelle der Beleuchtungsvorrichtung das Innere des Zyklonabscheiders möglichst optimal ausgeleuchtet werden kann. Eine möglichst optimale Ausleuchtung bedeutet insbesondere eine möglichst vollständige und gleichmäßige Ausleuchtung ohne Schattenwurf.

Dadurch, dass bei dieser Ausgestaltung in der ersten Position die Beleuchtungsvorrichtung von unten in das Innere des Abscheidebereichs und/oder in das Innere des Einlaufbereichs des Zyklonabscheiders leuchtet, ist die Richtung des von der mindestens einen Lichtquelle emittierten Lichts entlang der divergierenden Wandbereiche des Zyklonabscheiders ausgerichtet, was eine möglichst gleichmäßige und vollständige Innenraumbeleuchtung gewährleistet.

Um zu erreichen, dass die Beleuchtungsvorrichtung vorzugsweise automatisch oder zumindest mit nur wenigen Handgriffen in die erste Position überführbar ist, ist gemäß bevorzugten Realisierungen des erfindungsgemäßen Zyklonabscheiders vorgesehen, dass die Beleuchtungsvorrichtung nur dann von ihrer zweiten Position in ihre erste Position überführbar ist, wenn der Pulversammelbereich in seiner ersten Position vorliegt. Mit anderen Worten, das Überführen der Beleuchtungsvorrichtung in ihre erste Position wird blockiert, wenn der Zyklonabscheider sich nicht in dem Reinigungszustand befindet, d.h. wenn der Pulversammelbereich (noch) in seiner ersten Position vorliegt.

Alternativ oder zusätzlich hierzu ist es denkbar, dass die Beleuchtungsvorrichtung automatisch bzw. selbstständig oder selbsttätig von ihrer zweiten Position in ihre erste Position überführt wird, wenn der Pulversammelbereich von seiner ersten Position in die zweite Position überführt wird. So ist es beispielsweise denkbar, dass durch ein Herausschwenken des Pulversammelbereichs aus seiner ersten Position in seine zweite Position gleichzeitig mit dieser Schwenkbewegung die Beleuchtungsvorrichtung in ihre erste Position eingeschwenkt wird.

Ebenfalls ist es alternativ oder zusätzlich hierzu denkbar, dass die Beleuchtungsvorrichtung automatisch bzw. selbstständig oder selbsttätig von ihrer ersten Position, in welcher der Innenbereich des Zyklonabscheiders mit Hilfe der mindestens einen Lichtquelle der Beleuchtungsvorrichtung be- bzw. ausgeleuchtet wird, in ihre zweite Position überführt wird, wenn der Pulversammelbereich von seiner zweiten Position (d.h. der "Ruheposition" im Reinigungsbetrieb des Zyklonabscheiders) in seine erste Position überführt wird.

Andere koordinierte und/oder synchronisierte Bewegungen des Pulversammelbereichs einerseits und der Beleuchtungsvorrichtung andererseits sind selbstverständlich auch denkbar. Insbesondere bietet es sich in diesem Zusammenhang an, den Pulversammelbereich und die Beleuchtungsvorrichtung miteinander bewegungszukoppeln, beispielsweise über einen Kopplungsmechanismus (wie zum Beispiel einen Getriebemechanismus), so dass bei einer Bewegung des Pulversammelbereichs relativ zu dem Abscheidebereich in synchronisierter und insbesondere koordinierter Weise auch die Beleuchtungsvorrichtung bewegt wird.

Selbstverständlich kommen aber auch andere Lösungen in Frage, also Lösungen, in denen keine synchronisierte oder koordinierte Bewegungskopplung zwischen dem Pulversammelbereich und der Beleuchtungsvorrichtung vorgesehen ist. So ist es beispielsweise denkbar, dass die Beleuchtungsvorrichtung an einer Reinigungsvorrichtung, wie beispielsweise an einem Gestell einer Reinigungslanze oder dergleichen, angeordnet ist und automatisch bzw. selbstständig oder selbsttätig unterhalb der Ausgangsöffnung des Abscheidebereichs positioniert wird, wenn die Reinigungsvorrichtung zum Zwecke der Reinigung im oder am Inneren des Zyklonabscheiders positioniert ist.

Auch sind komplett ungeführte Bewegungen der Beleuchtungsvorrichtung grundsätzlich denkbar, bei denen der Betreiber des Zyklonabscheiders die Beleuchtungsvorrichtung an dem Zugang des geöffneten Abscheidebereichs lösbar positioniert, beispielsweise mit Hilfe einer Magnetverbindung oder einer Klemmverbindung. Diese Lösungen zeichnen sich sicherlich durch ihren einfachen Aufbau aus, nachteilig ist jedoch, dass bei diesen Lösungen der Betreiber des Zyklonabscheiders zusätzliche Handgriffe vorzunehmen hat, um die Beleuchtungsvorrichtung entsprechend anzubringen. Auch ist bei solchen manuellen Lösungen nicht sichergestellt, dass die Beleuchtungsvorrichtung in ihrer ersten Position eine möglichst optimale Be- bzw. Ausleuchtung des Inneren des Zyklonabscheiders gewährleistet.

Gemäß Ausführungsformen ist die Beleuchtungsvorrichtung ausgebildet ist, dass die mindestens eine Lichtquelle der Beleuchtungsvorrichtung automatisch eingeschaltet wird und/oder manuell einschaltbar ist, wenn die Beleuchtungsvorrichtung von ihrer zweiten Position in ihre erste Position überführt wird. Alternativ oder zusätzlich wird die mindestens eine Lichtquelle der Beleuchtungsvorrichtung automatisch ausgeschaltet und/oder manuell ausschaltbar ist, wenn die Beleuchtungsvorrichtung von ihrer ersten Position in ihre zweite Position überführt wird.

Zum Ein- bzw. Ausschalten der mindestens einen Lichtquelle kann ein entsprechender Schalter/Sensor an der Beleuchtungsvorrichtung vorgesehen sein, der manuell betätigbar ist und/oder der automatisch und insbesondere in Abhängigkeit der Position/Stellung der Beleuchtungsvorrichtung und/oder des Pulversammelbereichs aktivierbar/deaktivierbar ist.

Auch ist es denkbar (alternativ oder zusätzlich zu einem Schalter/Sensor an der Beleuchtungsvorrichtung), dass ein entsprechender Schalter/Sensor extern an einer Steuereinrichtung des Zyklonabscheiders oder einer Reinigungsvorrichtung des Zyklonabscheiders vorgesehen ist, beispielsweise in Gestalt eines Touch-Buttons auf einem Bildschirm der Steuereinrichtung.

Gemäß einer besonders bevorzugten Realisierung des erfindungsgemäßen Zyklonabscheiders ist vorgesehen, dass der Pulversammelbereich in einer horizontalen Schwenkebene relativ zu dem Abscheidebereich zwischen seiner ersten Position und seiner zweiten Position verschwenkbar ist. Bei dieser Ausgestaltung bietet es sich an, dass die Beleuchtungsvorrichtung ebenfalls in einer horizontalen Schwenkebene relativ zu dem Abscheidebereich zwischen ihrer ersten Position und ihrer zweiten Position verschwenkbar ist.

Um zu erreichen, dass die mindestens eine Lichtquelle der Beleuchtungsvorrichtung möglichst nahe an dem Zugang zum Inneren des Abscheidebereichs und/oder zu dem Inneren des Einlaufbereichs des Zyklonabscheiders positioniert ist, wenn sich der Pulversammelbereich in seiner zweiten Position befindet, sollte die horizontale Schwenkebene der Beleuchtungsvorrichtung vorzugsweise mit der horizontalen Schwenkebene des Pulversammelbereichs übereinstimmen oder zumindest im Wesentlichen übereinstimmen. Alternativ hierzu ist es selbstverständlich aber auch denkbar, dass eine Übereinstimmung der beiden horizontalen Schwenkebenen nicht gegeben ist, dann jedoch ist es bevorzugt, dass die horizontale Schwenkebene der Beleuchtungsvorrichtung zumindest in unmittelbarer Nähe der horizontalen Schwenkebene des Pulversammelbereichs liegt.

Selbstverständlich kommen aber auch andere Lösungen in Frage, insbesondere dann, wenn die mindestens eine Lichtquelle der Beleuchtungsvorrichtung eine spezielle Optik zum geeigneten Fokussieren des von der mindestens einen Lichtquelle emittierten Lichts aufweist. Insbesondere dann ist es auch denkbar, dass in der ersten Position der Beleuchtungsvorrichtung die mindestens eine Lichtquelle weiter von dem Zugang zum Inneren des Abscheidebereichs und/oder zum Inneren des Einlaufbereichs des Zyklonabscheiders vorliegt.

Obgleich nicht den Schutzbereich der vorliegenden Erfindung als einschränkend beabsichtigt, ist es im Hinblick auf eine möglichst einfache Bedienbarkeit des Zyklonabscheiders und insbesondere der Beleuchtungsvorrichtung von Vorteil, wenn die Beleuchtungsvorrichtung hinsichtlich des Zyklonabscheiders nicht beliebig positionierbar ist. Dies hat auch den Vorteil, dass der Betreiber des Zyklonabscheiders bei der Überführung der Beleuchtungsvorrichtung in ihre erste Position nicht auf vorab festgelegte oder festlegbare Vorzugsstellungen der mindestens einen Lichtquelle relativ zu dem Inneren des Zyklonabscheiders achten muss.

Unter Berücksichtigung dieser allgemeinen Gedanken ist gemäß einer Ausführungsvariante des erfindungsgemäßen Zyklonabscheiders vorgesehen, dass dieser ein Gestell aufweist, über welches der Einlaufbereich und/oder der Abscheidebereich des Zyklonabscheiders zumindest teilweise getragen werden/wird. In diesem Zusammenhang bietet es sich dann an, dass der Pulversammelbereich über eine Gelenkanordnung, insbesondere eine erste Gelenkanordnung, an dem Gestell schwenkbar gelagert ist, wobei die Beleuchtungsvorrichtung ebenfalls über eine Gelenkanordnung und vorzugsweise über eine von der ersten Gelenkanordnung des Pulversammelbereichs separat ausgeführte zweite Gelenkanordnung an dem Gestell schwenkbar gelagert ist.

Hierbei handelt es sich um eine besonders leicht realisierbare aber dennoch effektive Lösung zur Anlenkung des Pulversammelbereichs einerseits und der Beleuchtungsvorrichtung andererseits, da diese in einfacher Weise durch eine entsprechende Scharniergelenkanordnung umgesetzt werden kann. Insbesondere ist diese Lösungsvariante auch platzsparend und mit nur geringen Mehrkosten (wenn überhaupt) verbunden. Selbstverständlich ist aber die Erfindung nicht auf diese Ausgestaltung beschränkt.

Um die Bedienbarkeit des Zyklonabscheiders weiter zu vereinfachen und um insbesondere etwaige Fehler insbesondere beim Einstellen der ersten Position des Pulversammelbereichs wirksam zu vermeiden, ist gemäß einer bevorzugten Ausgestaltung des erfindungsgemäßen Zyklonabscheiders vorgesehen, dass dieser einen Anschlag aufweist, um zumindest die erste Position des Pulversammelbereichs zu definieren und um insbesondere eine Bewegung, insbesondere Schwenkbewegung, des Pulversammelbereichs relativ zu dem Abscheidebereich zu begrenzen, wenn der Pulversammelbereich von seiner zweiten Position in seine erste Position überführt wird. Gleiches kann alternativ oder zusätzlich selbstverständlich auch für die zweite Position des Pulversammelbereichs mit einem entsprechend zugeordneten Anschlag vorgesehen sein. Auch ist es alternativ oder zusätzlich hierzu denkbar, mindestens einen entsprechenden Anschlag für die Definition der Bewegung der Beleuchtungsvorrichtung entweder von der ersten in die zweite Position oder von der zweiten in die erste Position zu definieren.

Insbesondere im Hinblick auf den dem Zyklonabscheider zugeordneten Anschlag ist es in diesem Zusammenhang von Vorteil, dass dieser eine vorzugsweise zumindest bereichsweise aus einem Elastomer und/oder magnetisierten Material gebildete Anschlagfläche aufweist, die von einer insbesondere stegförmigen Halterung gehalten wird. Hierbei bietet es sich an, dass die Beleuchtungsvorrichtung ferner eine insbesondere stegförmige Halterung aufweist, wobei an einem ersten Endbereich der insbesondere stegförmigen Halterung der Beleuchtungsvorrichtung die mindestens eine Lichtquelle vorgesehen ist. Vorzugsweise ist bei dieser Realisierung des erfindungsgemäßen Zyklonabscheiders vorgesehen, dass einem zweiten Endbereich der insbesondere stegförmigen Halterung der Beleuchtungsvorrichtung ein mit der insbesondere stegförmigen Halterung des Anschlags verbundenes Scharniergelenk ausgebildet ist.

Hierbei handelt es sich um eine mögliche und insbesondere besonders einfach zu realisierende Realisierung des erfindungsgemäßen Zyklonabscheiders, wobei jedoch alternative Ausgestaltungen hiervon selbstverständlich denkbar sind.

Insbesondere ist gemäß einer Realisierung der zuletzt genannten Ausgestaltung des Zyklonabscheiders vorgesehen, dass an dem ersten Endbereich der insbesondere stegförmigen Halterung der Beleuchtungsvorrichtung ein Kantenschutz ausgebildet ist, wobei die Drehachse des Scharniergelenks insbesondere an einer Außenkante der insbesondere stegförmigen Halterung des Anschlags anliegt.

Diese Ausführungsvariante hat den Vorteil, dass die möglichen Bewegungsabläufe der Beleuchtungsvorrichtung einerseits und des Pulversammelbereichs andererseits mit Hilfe einer besonders einfach zu realisierenden Maßnahme, nämlich mit Hilfe eines entsprechenden Scharniergelenks, umsetzbar ist.

Gemäß Ausgestaltungen des erfindungsgemäßen Zyklonabscheiders ist vorgesehen, dass zumindest der untere Endbereiche des Abscheidebereichs kegelstumpfartig mit einer sich in Richtung des Pulversammelbereichs verjüngenden, insbesondere konisch zulaufenden Mantelgeometrie ausgeführt ist, wobei der Pulversammelbereich mit einer sich in Richtung eines am unteren Endbereich des Pulversammelbereichs vorgesehenen Pulverauslasses insbesondere konisch verjüngenden Mantelgeometrie versehen ist. In der ersten Position des Pulversammelbereichs ist dabei dieser vorzugsweise relativ zu dem Abscheidebereich des Zyklonabscheiders in Längsrichtung des Zyklonabscheiders vorzugsweise pneumatisch bewegbar, so dass eine Auslassöffnung des Abscheidebereichs mit einer Einlassöffnung des Pulversammelbereichs (ordnungsgemäß) verbindbar ist. An Stelle einer pneumatischen Bewegung des Pulversammelbereichs relativ zu dem Abscheidebereich in Längsrichtung des Zyklonabscheiders ist selbstverständlich auch eine hydraulische, elektrische oder manuelle Bewegung denkbar.

Gemäß Realisierungen des erfindungsgemäßen Zyklonabscheiders weist dieser ein in einem insbesondere zumindest bereichsweise zylinderförmigen Siebgehäuse gehaltenes Sieb auf, welches derart zwischen dem unteren Endbereich des Abscheidebereichs und dem Pulversammelbereich eingesetzt oder einsetzbar ist, dass die Öffnung am oberen Ende des insbesondere zylinderförmigen Siebgehäuses mit der Auslassöffnung am unteren Endbereich des Abscheidebereichs und die Öffnung am unteren Ende des insbesondere zylinderförmigen Siebgehäuses mit der Einlassöffnung am oberen Ende des Pulversammelbereichs übereinstimmt.

Die Verwendung eines in dem Zyklonabscheider eingebauten oder einbaubaren Siebs hat den Vorteil, dass bereits im Inneren des Zyklonabscheiders grobkörnige Verunreinigungen von dem in dem Abscheidebereich abgeschiedenen Pulver separiert werden können, so dass dieses Pulver beispielsweise direkt als Rückgewinnungspulver in einer Pulverbeschichtungsanlage wiederverwendet werden kann, ohne dass hierzu zusätzliche Siebvorrichtungen stromaufwärts oder stromabwärts des Zyklonabscheiders vorzusehen sind. Dies gestattet die Realisierung einer besonders kompakt ausgeführten Pulverrückgewinnungsvorrichtung, die sich durch ihre einfache Bauweise und ihren geringen Platzbedarf auszeichnet.

Des Weiteren ist zu berücksichtigen, dass sich bei einem im Inneren des Zyklonabscheiders vorgesehenen Siebs die beispielsweise bei einem Pulverwechsel erforderliche Reinigung des Siebs wesentlich leichter und schneller realisieren lässt, ohne dass Gefahr besteht, dass dabei die Umgebung mit Pulver kontaminiert wird.

So ist es beispielsweise denkbar, dass das Sieb über eine vorzugsweise horizontale Schwenkbewegung zwischen dem unteren Endbereich des Abscheidebereichs und dem Pulversammelbereich ein- und ausschwenkbar ist. In einem nur teilweise eingeschwenkten Zustand kann das Sieb bereits mühelos von dem Betreiber des Zyklonabscheiders beispielsweise zum Zwecke der Reinigung erreicht werden, wobei jedwedes bei der Reinigung von dem Sieb abfallendes Pulvermaterial von der im Zyklonabscheider eingestellten Strömung angesogen wird und somit nicht nach außen gelangen kann.

Aufgrund der speziellen Positionierung des Siebs zwischen dem unteren Endbereich des Abscheidebereichs und dem Pulversammelbereich wird ferner sichergestellt, dass das Sieb in einer horizontalen Ebene unmittelbar am Umkehrpunkt der sich im Betrieb innerhalb des Zyklonabscheiders ausbildenden Hauptströmung befindet. Obwohl es grundsätzlich denkbar ist, dass das Sieb in einer durch den Umkehrpunkt laufenden horizontalen Ebene liegt, ist es für die Effizienz des Siebvorgangs bevorzugt, wenn das Sieb leicht oberhalb des Umkehrpunkts angeordnet ist, damit die in Richtung Pulversammelbereich gerichteten Axialgeschwindigkeitskomponenten der Hauptströmung im Inneren des Zyklonabscheiders für den Durchtritt der Pulverpartikel durch den Siebboden bzw. den Siebbelag ausgenutzt werden können.

Selbstverständlich ist es aber auch denkbar, dass das Sieb in einer horizontalen Ebene angeordnet ist, welche durch den Umkehrpunkt der sich im Betrieb innerhalb des Zyklonabscheiders ausbildenden Hauptströmung läuft.

Auch ist es denkbar, dass das Sieb unterhalb des Umkehrpunkts liegt. Dies ist insbesondere dann möglich, wenn beispielsweise das Sieb eine im Vergleich zur Korngröße des Pulvers relativ große Maschenweite aufweist, so dass für den Siebvorgang, d.h. für den Durchtritt der Pulverpartikel durch den Siebboden bzw. durch den Siebbelag, auf eine treibende Kraft in Gestalt der in Richtung Pulversammelbereich gerichteten Axialgeschwindigkeitskomponente der Hauptströmung verzichtet werden kann.

Von Vorteil ist, dass das Sieb in oder in der Nähe (oberhalb oder unterhalb) des Umkehrpunkts der Hauptströmung angeordnet ist, um eine aufgrund von Reibung verursachte und durch im Gemischstrom enthaltenen Pulverpartikel erzeugte mechanische Beanspruchung der Sieboberfläche und somit Abrieb und Materialverlust an der Sieboberfläche reduzieren zu können.

Der für die Positionierung des Siebs charakteristische Umkehrpunkt der sich im Betrieb innerhalb des Zyklonabscheiders ausbildenden Hauptströmung wird durch die natürliche Wirbellänge bestimmt. Bei einem Zyklonabscheider, dessen Abscheidebereich einen kegelstumpfartig ausgebildeten unteren Endbereich aufweist, endet der sich im Betrieb im Inneren des Zyklonabscheiders ausbildende Wirbel näherungsweise in einem Punkt, der dem Schnittpunkt der Mantellinien des kegelstumpfartig ausgebildeten unteren Endbereichs entspricht.

Hierbei ist zu berücksichtigen, dass die Umfangsgeschwindigkeit der Hauptströmung im Umkehrpunkt den Wert 0 annimmt bzw. im Vergleich zur Umfangsströmung oberhalb des Umkehrpunkts deutlich reduziert ist. Indem das Sieb vorzugsweise im oder unmittelbar am Umkehrpunkt der Hauptströmung angeordnet ist, kann wirkungsvoll die aufgrund von Reibung verursachte und durch im Gemischstrom enthaltenen Pulverpartikel erzeugte mechanische Beanspruchung der Sieboberfläche und somit Abrieb und Materialverlust an der Sieboberfläche reduziert werden.

Demnach zeichnet sich diese Ausgestaltung des erfindungsgemäßen Zyklonabscheiders insbesondere auch dadurch aus, dass im Vergleich zu herkömmlichen Zyklonabscheidern weniger häufig Wartungsarbeiten und somit Standzeiten des Zyklonabscheiders erforderlich sind.

Gemäß Realisierungen des erfindungsgemäßen Zyklonabscheiders ist das insbesondere zylinderförmige Siebgehäuse über eine vorzugsweise horizontale Schwenkbewegung zwischen dem unteren Endbereich des Abscheidebereichs und dem Pulversammelbereich des Zyklonabscheiders einschwenkbar.

Grundsätzlich ist es von Vorteil, dass eine Fluidisiervorrichtung vorgesehen ist zum Fluidisieren von als Rückgewinnungspulver im Pulversammelbereich des Zyklonabscheiders gesammeltem Pulver.

Beispielsweise ist es in diesem Zusammenhang denkbar, dass die Fluidisiervorrichtung mindestens eine Fluidisierwand zwischen einer Wand des Pulversammelbereichs und einer Fluidisierdruckluftkammer aufweist, wobei die Fluidisierwand eine Vielzahl von offenen Poren oder Bohrungen aufweist, welche so klein sind, dass sie für Fluidisierluft durchlässig, jedoch für Pulverpartikel des Rückgewinnungspulvers undurchlässig sind.

Hierbei ist es im Hinblick auf eine besonders kompakte Ausgestaltung des erfindungsgemäßen Zyklonabscheiders von Vorteil, dass die mindestens eine Fluidisierwand vorzugsweise mindestens einen Teil einer Wand bildet, welche den Pulversammelbereich des Zyklonabscheiders bildet.

Vorzugsweise sollte der Pulversammelbereich an seinem unteren Ende einen Pulverauslass aufweisen, um das in dem Pulversammelbereich gesammelte Pulver abführen zu können. Insbesondere bietet es sich in diesem Zusammenhang an, dass der Pulverauslass mit einem Pulverauslassventil versehen ist, so dass, wenn das Pulverauslassventil geschlossen ist, im Pulversammelbereich das in dem Abscheidebereich abgeschiedene Pulver als Rückgewinnungspulver speicherbar ist. Vorzugsweise ist das Pulverauslassventil als Quetschventil ausgeführt.

Insbesondere gemäß Weiterbildungen der zuletzt genannten Ausführungsformen ist vorgesehen, dass der Pulversammelbereich mit mindestens einem Sensor versehen ist, um mindestens ein vorbestimmtes Pulverniveau im Pulversammelbereich detektieren zu können, wobei vorzugsweise eine Einrichtung zum Erzeugen von mechanischen Vibrationen in dem Pulversammelbereich vorgesehen ist, um ein Anhaften von Pulver am Wandbereich des Pulversammelbereichs zu vermeiden, und um möglichst genaue Pulverniveau-Detektierungen mit dem mindestens einen Sensor sicherzustellen.

Die Erfindung betrifft ferner eine Pulverrückgewinnungsvorrichtung für eine Pulverbeschichtungsanlage, wobei die Pulverrückgewinnungsvorrichtung einen Zyklonabscheider nach der zuvor beschriebenen erfindungsgemäßen Art aufweist, welcher an dem unteren Ende des Pulversammelbereichs einen Pulverauslass mit einem Pulverauslassventil aufweist zum Abführen des in dem Pulversammelbereich gesammelten Pulvers. Vorzugsweise ist ferner eine Pulverpumpe stromabwärts des Pulverauslassventils in einem Pulverauslassweg vorgesehen, um von als Rückgewinnungspulver gesammeltes Pulver aus dem Pulversammelbereich zu fördern.

Nachfolgend wird unter Bezugnahme auf die beiliegenden Zeichnungen eine exemplarische Ausführungsform des erfindungsgemäßen Zyklonabscheiders näher beschrieben.

Es zeigen:
- FIG. 1: schematisch und in einer isometrischen Ansicht eine exemplarische Ausführungsform des erfindungsgemäßen Zyklonabscheiders, wobei der Pulversammelbereich des Zyklonabscheiders in seiner ersten Position vorliegt;
- FIG. 2: schematisch und in einer Seitenansicht den Pulversammelbereich der exemplarischen Ausführungsform des erfindungsgemäßen Zyklonabscheiders gemäß FIG. 1;
- FIG. 3: schematisch und in einer Seitenansicht den unteren Endbereich des Abscheidebereichs der exemplarischen Ausführungsform des erfindungsgemäßen Zyklonabscheiders gemäß FIG. 1 ohne Pulversammelbereich;
- FIG. 4: schematisch und in einer Draufsicht von unten die exemplarische Ausführungsform des erfindungsgemäßen Zyklonabscheiders gemäß FIG. 3;
- FIG. 5: schematisch eine Detailansicht der FIG. 4 betreffend die dort zum Einsatz kommende Beleuchtungsvorrichtung;
- FIG. 6: schematisch und in einer isometrischen Ansicht die exemplarische Ausführungsform des erfindungsgemäßen Zyklonabscheiders, wobei der Pulversammelbereich in seiner zweiten Position vorliegt;
- FIG. 7: schematisch und in einer Ansicht von unten die exemplarische Ausführungsform des erfindungsgemäßen Zyklonabscheiders gemäß FIG. 8; und
- FIG. 8: schematisch eine Detailansicht der FIG. 7 betreffend die dort zum Einsatz kommende Beleuchtungsvorrichtung.

Die in den Zeichnungen gezeigte exemplarische Ausführungsform des erfindungsgemäßen Zyklonabscheiders 1 eignet sich insbesondere für den Einsatz in einer Pulversprühbeschichtungsanlage zum Sprühbeschichten von Objekten mit Beschichtungspulver, welches danach in einem Wärmeofen auf das Objekt aufgeschmolzen wird.

Zur Rückgewinnung von überschüssigem Pulver, also Pulver, welches an dem zu beschichtenden Objekt vorbeigesprüht wird oder vom Objekt abfällt, ist es bekannt, einen Pulverabscheider insbesondere in Gestalt eines Zyklonabscheiders 1 strömungsmäßig über eine Absaugöffnung mit dem Innenraum der Beschichtungskabine zu verbinden. Ein Sauggebläse, welches beispielsweise an einem Luftauslass des Zyklonabscheiders 1 angeschlossen ist, saugt aus dem Kabineninnenraum der Beschichtungskabine zumindest einen Großteil des Überschusspulvers und Luft durch den Zyklonabscheider 1, wobei in dem Zyklonabscheider 1 die Pulver-Luft-Strömung durch Zyklon-Zentrifugalkräfte in Luft und Pulver getrennt wird. Das abgetrennte Pulver fällt in einen Pulversammelbereich 4 oder Auffangbehälter unter dem Zyklonabscheider 1, während die von Pulver gereinigte Luft in der Regel über einen Nachfilter in die Außenatmosphäre geblasen wird. Zyklonabscheider 1 benötigen in der Regel einen solchen Nachfilter, weil sie feine Pulverpartikel nicht so vollständig vom Luftstrom trennen können, wie es bei einem Filtersystem der Fall ist.

Das aufzubereitende Pulver-Luft-Gemisch wird durch eine Rohrleitung und einen insbesondere tangentialen Lufteintritt in den Zyklonabscheider 1 gebracht. Das Pulver-Luft-Gemisch wird nun in eine Drehbewegung gebracht, durch die entstandene Zentrifugalkraft wird das Pulver von der Luft getrennt und entlang der Zyklonwand abgeschieden. Die Abluft steigt durch ein zentrales Tauchrohr im Zyklonabscheider 1 hoch und gelangt dann zu einem in den Zeichnungen nicht gezeigten, nachgeschalteten Filterabscheider. Hier wird das verbliebene Restpulver zurückgehalten und die gereinigte Luft wieder in die Außenatmosphäre zurückgeführt.

Im Einzelnen weist somit der erfindungsgemäße Zyklonabscheider 1 einen Einlaufbereich 2 mit einem Einlass für den Pulver-Luft-Gemischstrom, einen sich an dem unteren Endbereich des Einlaufbereichs 2 anschließenden Abscheidebereich 3 zur Fliehkraftabscheidung von zumindest einem Teil des im Gemischstrom enthaltenen Pulvers, und einen mit dem unteren Endbereich des Abscheidebereichs 3 verbundenen oder verbindbaren Pulversammelbereich 4 zum Sammeln des in dem Abscheidebereich 3 abgeschiedenen Pulver auf.

Gemäß der in den Zeichnungen dargestellten Ausführungsform des erfindungsgemäßen Zyklonabscheiders 1 ist zumindest der untere Endbereich des Abscheidebereichs 3 kegelstumpfartig mit einer sich in Richtung des Pulversammelbereichs 4 verjüngenden, insbesondere konisch zulaufenden Mantelgeometrie ausgeführt. Auch kann der obere Endbereich des Abscheidebereichs 3 leicht konisch zulaufend oder aber auch zylindrisch ausgebildet sein. Am oberen Ende des Abscheidebereichs 3 schließt sich der bereits genannte, ebenfalls zylindrisch ausgebildete Einlaufbereich 2 mit dem Pulvereinlass an. Im radialen Zentrum des Einlaufbereichs 2 befindet sich ein Luftstromauslass, welcher durch das stromaufwärtige Ende einer Ablaufleitung gebildet oder an welchem die Ablaufleitung angeschlossen sein kann.

Zum Sammeln des in dem Abscheidebereich 3 abgeschiedenen Pulvers ist mit dem unteren Endbereich des Abscheidebereichs 3 der Pulversammelbereich 4 verbunden oder verbindbar.

Der Pulversammelbereich 4 weist eine sich in Richtung des am unteren Ende des Pulversammelbereichs 4 vorgesehenen Pulverauslasses 5 insbesondere konisch verjüngenden Mantelgeometrie auf, so dass das in dem Pulversammelbereich 4 gesammelte Rückführungspulver durch Schwerkraft in Richtung des Pulverauslasses 5 fällt. Der Pulverauslass 5 ist mit einem Pulverauslassventil, vorzugsweise mit einem Quetschventil, versehen, mittels welchem der Pulverauslass 5 alternativ geöffnet oder geschlossen werden kann.

Im unteren Teil des Pulversammelbereichs 4 kann eine Fluidisiervorrichtung angeordnet sein zur Fluidisierung des Rückgewinnungspulvers im Pulversammelbereich 4. Die Fluidisiervorrichtung kann in den Pulversammelbereich 4 hineinragen oder vorzugsweise derart ausgebildet sein, dass die Fluidisierwand der Fluidisiervorrichtung mindestens einen Teil der Wand des Pulversammelbereichs 4 bildet.

Der Begriff "Fluidisieren" bedeutet hier, dass die Fluidisierdruckluft das Rückgewinnungspulver durchströmt und dadurch das Rückgewinnungspulver in einen fließfähigen (fluidisierten) Zustand versetzt oder die Fließfähigkeit des Rückgewinnungspulvers verbessert.

Der Pulversammelbereich 4 kann ferner mit mindestens einem Sensor versehen sein. Dies kann ein Niveausensor oder Schalter sein, welcher ein Signal erzeugt, und zwar in Abhängigkeit davon, ob das Rückgewinnungspulver im Pulversammelbereich 4 mindestens das von dem Sensor detektierte Pulverniveau erreicht oder nicht. Der Sensor ist beispielsweise in einem bestimmten Abstand über dem Pulverauslassventil angeordnet und kann dazu verwendet werden, eine vorbestimmte Reservemenge an Rückgewinnungspulver zu definieren.

Bevorzugt ist es, wenn eine Einrichtung zum Erzeugen von mechanischen Vibrationen in dem Pulversammelbereich 4 vorgesehen ist, so dass bei Bedarf eine mechanische Vibration auf den Pulversammelbereich 4 aufgebracht werden kann, um auf diese Weise ggf. auf dem Sensor abgelagertes Pulvermaterial zu lösen.

Das insbesondere als Quetschventil ausgebildete Pulverauslassventil wird vorzugsweise jeweils nur dann geöffnet, wenn aus dem Pulversammelbereich 4 Rückgewinnungspulver entnommen wird, während das Pulverauslassventil vorzugsweise immer dann geschlossen bleibt, wenn dem Zyklonabscheider 1 bzw. dem Pulversammelbereich 4 kein Pulver entnommen wird. Dadurch wird vermieden, dass Luft in den Zyklonabscheider 1 gelangt und die Fliehkraftabscheidung stört.

Obgleich in den Zeichnungen nicht dargestellt, ist es bevorzugt, dass an der Auslassseite des Pulverauslassventils eine Pulverrückgewinnungsleitung angeschlossen ist. Vorzugsweise befindet sich in der Pulverrückgewinnungsleitung oder noch bevorzugter an ihrem stromaufwärtigen oder an ihrem stromabwärtigen Ende eine Pulverpumpe zur Förderung von Rückgewinnungspulver aus dem Pulversammelbereich 4 zu einem Zwischenbehälter der Pulverrückgewinnungsvorrichtung bzw. Pulverbeschichtungsanlage.

In diesem Zusammenhang ist es von Vorteil, dass die Pulverpumpe von einem Steuergerät jeweils nur dann eingeschaltet wird, wenn auch das Pulverauslassventil von dem Steuergerät geöffnet wird. Dadurch wird je nach Art der Pulverpumpe verhindert, dass von ihr Druckluft aus dem Zyklonabscheider 1 abgesaugt oder in den Zyklonabscheider 1 gefördert wird und dadurch die Funktion des Zyklonabscheiders 1 gestört wird.

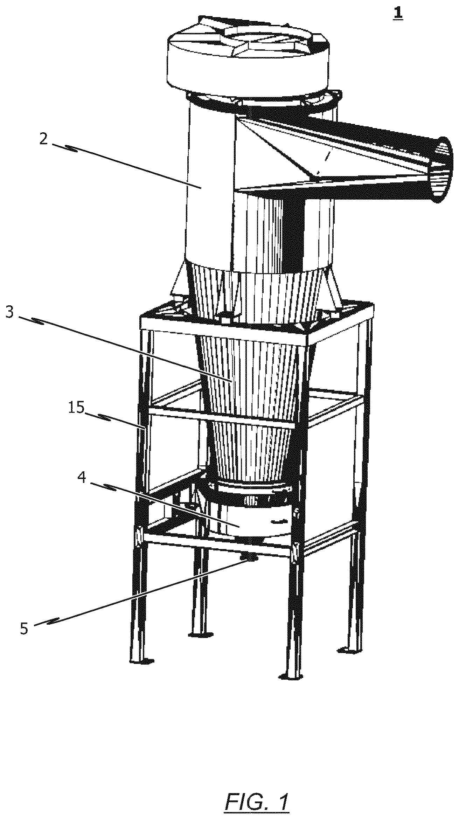

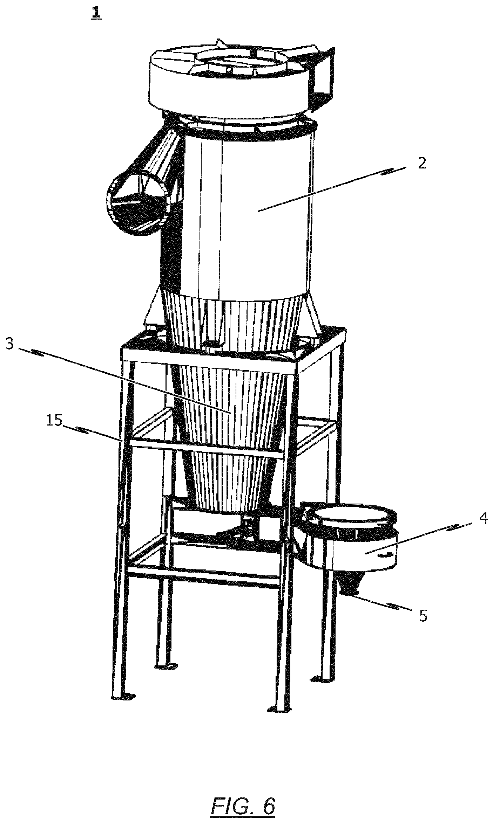

Wie es insbesondere der Darstellung in FIG. 6 entnommen werden kann, ist der Pulversammelbereich 4 des Zyklonabscheiders 1 relativ zu dem Abscheidebereich 3 zwischen einer ersten Position (vgl. FIG. 1), in welcher der Pulversammelbereich 4 mit dem unteren Endbereich des Abscheidebereichs 3 insbesondere fluchtend verbunden ist, und einer zweiten Position (vgl. FIG. 6) überführbar, in welcher der Pulversammelbereich 4 nicht mit dem unteren Endbereich des Abscheidebereichs 3 insbesondere fluchtend verbunden ist, und in welchem so über den unteren Endbereich des Abscheidebereichs 3 ein Zugang zum Inneren des Abscheidebereichs 3 und/oder Einlaufbereichs 2 des Zyklonabscheiders 1 möglich ist.

Zu diesem Zweck ist der Pulversammelbereich 4 in einer horizontalen Schwenkebene relativ zu dem Abscheidebereich 3 zwischen der ersten Position (FIG. 1) und der zweiten Position (FIG. 6) verschwenkbar.

Wie dargestellt, ist nicht nur der untere Endbereich des Abscheidebereichs 3 kegelstumpfartig mit einer sich in Richtung des Pulversammelbereichs 4 verjüngenden, insbesondere konisch zulaufenden Mantelgeometrie ausgeführt, sondern auch der Pulversammelbereich 4, der mit einer sich in Richtung des am unteren Endbereich des Pulversammelbereichs 4 vorgesehenen Pulverauslasses 5 konisch verjüngenden Mantelgeometrie versehen ist.

In der in FIG. 1 gezeigten ersten Position des Pulversammelbereichs 4 ist dieser relativ zu dem Abscheidebereich 3 in Längsrichtung des Zyklonabscheiders 1 vorzugsweise pneumatisch, hydraulisch, elektrisch oder manuell bewegbar, so dass eine Auslassöffnung des Abscheidebereichs 3 mit einer Einlassöffnung des Pulversammelbereichs 4 verbindbar ist.

Vorzugsweise weist der Zyklonabscheider 1 ein in einem insbesondere zumindest bereichsweise zylinderförmigen Siebgehäuse gehaltenes Sieb auf, welches derart zwischen dem unteren Endbereich des Abscheidebereichs 3 und dem Pulversammelbereich 4 eingesetzt oder einsetzbar ist, dass die Öffnung am oberen Ende des insbesondere zylinderförmigen Siebgehäuses mit der Auslassöffnung am unteren Endbereich des Abscheidebereichs 3 und die Öffnung am unteren Ende des insbesondere zylinderförmigen Siebgehäuses mit der Einlassöffnung am oberen Ende des Pulversammelbereichs 4 übereinstimmt. Das insbesondere zylinderförmige Siebgehäuse ist vorzugsweise über eine insbesondere horizontale Schwenkbewegung zwischen dem unteren Endbereich des Abscheidebereichs 3 und dem Pulversammelbereich 4 einschwenkbar.

Die exemplarische Ausführungsform des erfindungsgemäßen Zyklonabscheiders 1 zeichnet sich insbesondere dadurch aus, dass der Zyklonabscheider 1 ferner eine Beleuchtungsvorrichtung 6 mit mindestens einer Lichtquelle 7, insbesondere in Gestalt einer LED mit einer entsprechenden Optik, aufweist. Die Beleuchtungsvorrichtung 6 ist dabei relativ zu dem Abscheidebereich 3 zwischen einer ersten Position, in welcher mit der mindestens einen Lichtquelle 7 über den unteren Endbereich des Abscheidebereichs 3 zumindest teil- oder bereichsweise das Innere des Abscheidebereichs 3 und/oder das Innere des Einlaufbereichs 2 des Zyklonabscheiders 1 be- oder ausleuchtbar ist, und einer zweiten Position überführbar, in welcher der Pulversammelbereich 4 in seiner ersten Position vorliegt und ein zumindest teil- oder bereichsweises Be- oder Ausleuchten des Inneren des Abscheidebereichs 3 und/oder des Inneren des Einlaufbereichs 2 des Zyklonabscheiders 1 mit Hilfe der mindestens einen Lichtquelle 7 verhindert wird.

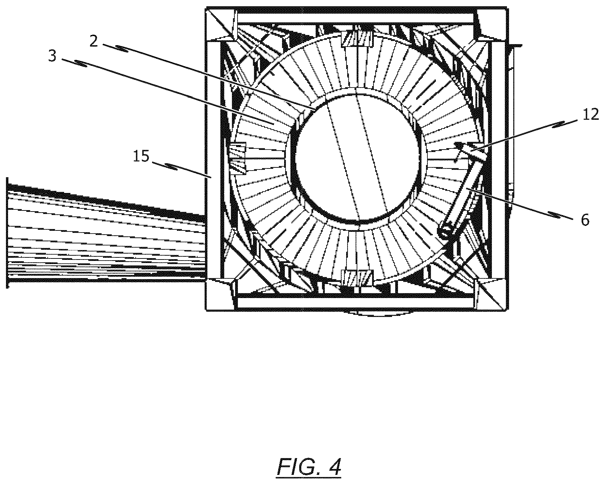

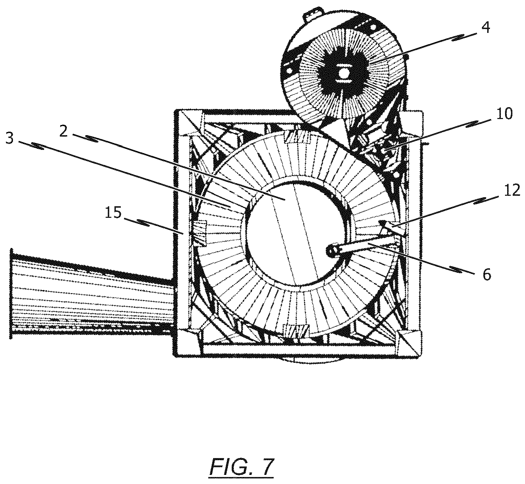

In FIG. 1 bis FIG. 5 liegt die Beleuchtungsvorrichtung 6 der exemplarischen Ausführungsform des erfindungsgemäßen Zyklonabscheiders 1 in ihrer ersten Position vor, während in FIG. 6 bis FIG. 8 die Beleuchtungsvorrichtung 6 in ihrer zweiten Position vorliegt.

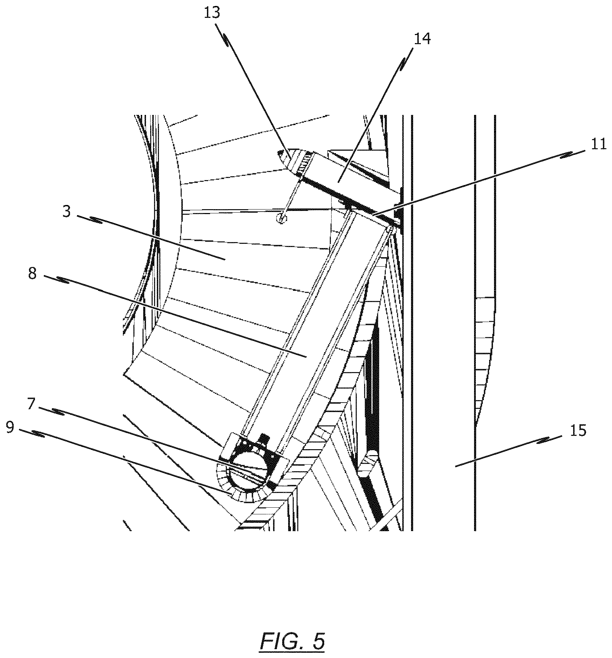

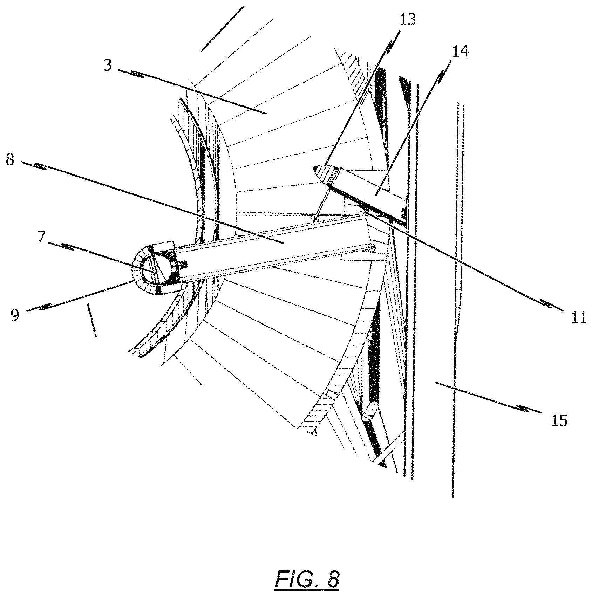

Vorzugsweise ist die Beleuchtungsvorrichtung 6 ausgebildet, dass die Beleuchtungsvorrichtung 6 nur dann von ihrer zweiten Position (vgl. insbesondere FIG. 5) in ihre erste Position (vgl. insbesondere FIG. 8) überführbar ist, wenn der Pulversammelbereich 4 in seiner ersten Position vorliegt.

Alternativ oder zusätzlich hierzu ist die Beleuchtungsvorrichtung 6 insbesondere ausgebildet, dass die Beleuchtungsvorrichtung 6 automatisch, d.h. selbstständig, von ihrer ersten Position in ihre zweite Position überführt wird, wenn der Pulversammelbereich 4 von seiner zweiten Position in seine erste Position überführt wird.

Wie auch der Pulversammelbereich 4 des erfindungsgemäßen Zyklonabscheiders 1 ist die Beleuchtungsvorrichtung 6 in einer horizontalen Schwenkebene relativ zu dem Abscheidebereich 3 zwischen ihrer ersten Position und ihrer zweiten Position verschwenkbar. Dabei stimmt vorzugsweise die horizontale Schwenkebene der Beleuchtungsvorrichtung 6 mit der horizontalen Schwenkebene des Pulversammelbereichs 4 überein oder liegt zumindest vorzugsweise in unmittelbarer Nähe der horizontalen Schwenkebene des Pulversammelbereichs 4.

Den Darstellungen in FIG. 1 und FIG. 6 kann entnommen werden, dass die exemplarische Ausführungsform des erfindungsgemäßen Zyklonabscheiders 1 ein Gestell 15 aufweist, über welches der Einlaufbereich 2 und der Abscheidebereich 3 des Zyklonabscheiders 1 zumindest teilweise getragen werden.

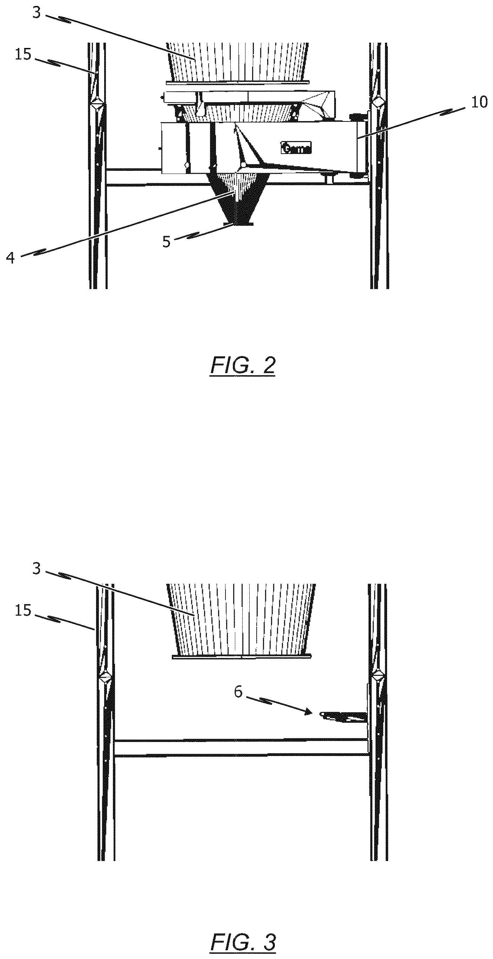

Wie es ferner beispielsweise der Seitenansicht in FIG. 2 entnommen werden kann, ist der Pulversammelbereich 4 über eine erste Gelenkanordnung 10 an dem Gestell 15 schwenkbar gelagert.

Insbesondere den Detailansichten in FIG. 5 und FIG. 8 ist entnehmbar, dass auch die Beleuchtungsvorrichtung 6 über eine von der ersten Gelenkanordnung 10 des Pulversammelbereichs 4 separat ausgeführte zweite Gelenkanordnung 11 an dem Gestell 15 schwenkbar gelagert ist.

Den Detailansichten in FIG. 5 und FIG. 8 ist ferner zu entnehmen, dass der Zyklonabscheider 1 mindestens einen Anschlag 12 aufweist, um eine erste Position des Pulversammelbereichs 4 zu definieren, und um eine Bewegung, insbesondere Schwenkbewegung, des Pulversammelbereichs 4 relativ zu dem Abscheidebereich 3 zu begrenzen, wenn der Pulversammelbereich 4 von seiner zweiten Position in seine erste Position überführt wird.

Der Anschlag 12 weist eine vorzugsweise zumindest bereichsweise aus einem Elastomer gebildete Anschlagfläche 13 auf. Alternativ oder zusätzlich hierzu ist es aber auch denkbar, dass die Anschlagfläche 13 des Anschlags 12 aus einem magnetisierten Material gebildet ist, so dass in der ersten Position der Pulversammelbereich 4 fixiert wird.

Bei der in den Zeichnungen gezeigten exemplarischen Ausführungsform wird die Anschlagfläche 13 von einer insbesondere stegförmigen Halterung 14 des Anschlags 12 gehalten.

Andererseits weist die Beleuchtungsvorrichtung 6 ebenfalls eine insbesondere stegförmige Halterung 8 auf, wobei an einem ersten Endbereich der insbesondere stegförmigen Halterung 8 der Beleuchtungsvorrichtung 6 die mindestens eine Lichtquelle 7 vorgesehen ist. An dem gegenüberliegenden zweiten Endbereich der insbesondere stegförmigen Halterung 8 der Beleuchtungsvorrichtung 6 ist ein mit der insbesondere stegförmigen Halterung 14 des Anschlags 12 verbundenes Scharniergelenk 11 ausgebildet.

Schließlich ist den Detailansichten in FIG. 5 und FIG. 8 zu entnehmen, dass an dem ersten Endbereich der insbesondere stegförmigen Halterung 8 der Beleuchtungsvorrichtung 6 ein Kantenschutz 9 ausgebildet ist.

Mit Hilfe der Beleuchtungsvorrichtung 6 ist insbesondere zum Zwecke einer Inspektion oder Reinigung der Innenraum des Zyklonabscheiders 1 ausleuchtbar.

Vorzugsweise wird die mindestens eine Lichtquelle 7 der Beleuchtungsvorrichtung 6 automatisch eingeschaltet, wenn die Beleuchtungsvorrichtung 6 von ihrer zweiten Position in ihre erste Position überführt wird. Selbstverständlich kann das Ein- und Ausschalten auch manuell erfolgen.

Die in den Zeichnungen gezeigte Realisierung der Beleuchtungsvorrichtung 6 stellt eine gute Ausleuchtung des Innenbereichs des Zyklonabscheiders 1 ohne Schattenwurf dar, wobei gleichzeitig in der zweiten Position des Pulversammelbereichs 4 der Zugang zu dem Abscheidebereich 3 nach wie vor gegeben ist.

Die Erfindung ist nicht auf die in den Zeichnungen gezeigte Ausgestaltung des Zyklonabscheiders 1 beschränkt, sondern ergibt sich aus einer Zusammenschau sämtlicher hierin offenbarter Merkmale. Insbesondere ist es erfindungsgemäß nicht zwingend erforderlich, dass die Beleuchtungsvorrichtung 6 relativ zu dem Abscheidebereich 3 zwischen einer ersten Position und einer zweiten Position bewegbar ist. Wesentlich ist lediglich, dass die Beleuchtungsvorrichtung 6 ausgebildet ist, mit Hilfe der mindestens einen Lichtquelle 7 bedarfsweise zumindest Teilbereiche des Inneren des Abscheidebereichs 3 und/oder des Einlaufbereichs 2 des Zyklonabscheiders 1 zu beleuchten oder auszuleuchten, und zwar insbesondere (aber nicht gezwungenermaßen ausschließlich) dann, wenn sich der Pulversammelbereich 4 in seiner zweiten Position befindet.

In diesem Zusammenhang ist es insbesondere auch denkbar, dass die Beleuchtungsvorrichtung 6 ausgebildet ist, dass die mindestens eine Lichtquelle 7 der Beleuchtungsvorrichtung 6 automatisch eingeschaltet wird, wenn sich der Pulversammelbereich 4 in seiner zweiten Position befindet bzw. wenn der Pulversammelbereich 4 in seine zweite Position überführt wird.

In gleicher Weise ist es denkbar, dass die mindestens eine Lichtquelle 7 der Beleuchtungsvorrichtung 6 automatisch ausgeschaltet wird, wenn sich der Pulversammelbereich 4 in seiner ersten Position befindet bzw. wenn der Pulversammelbereich 4 in seine erste Position überführt wird.

Wie bereits im allgemeinen Teil der Beschreibung angedeutet, kann die mindestens eine Lichtquelle 7 der Beleuchtungsvorrichtung 6 außerhalb des Abscheidebereichs 3 und des Einlaufbereichs 2 des Zyklonabscheiders 1 angeordnet sein, wie es bei der exemplarischen Ausführungsform in den Zeichnungen gezeigt ist. Alternativ zu der in den Zeichnungen gezeigten Ausführungsform kann jedoch die mindestens eine Lichtquelle 7 der Beleuchtungsvorrichtung 6 auch relativ zu dem Abscheidebereich 3 und relativ zu dem Einlaufbereich 2 des Zyklonabscheiders 1 fest installiert sein.

Alternativ oder zusätzlich hierzu ist es auch denkbar, dass mindestens eine Lichtquelle 7 der Beleuchtungsvorrichtung 6 innerhalb des Abscheidebereichs 3 oder des Einlaufbereichs 2 des Zyklonabscheiders 1 angeordnet ist.

### Bezugszeichenliste

- 1: Zyklonabscheider
- 2: Einlaufbereich
- 3: Abscheidebereich
- 4: Pulversammelbereich
- 5: Pulverauslass
- 6: Beleuchtungsvorrichtung
- 7: Lichtquelle
- 8: stegförmige Halterung der Beleuchtungsvorrichtung
- 9: Kantenschutz der Beleuchtungsvorrichtung
- 10: erste Gelenkanordnung
- 11: zweite Gelenkanordnung/Scharniergelenk
- 12: Anschlag
- 13: Anschlagsfläche
- 14: stegförmige Halterung des Anschlags
- 15: Gestell

## Patentansprüche

1. Zyklonabscheider (1) insbesondere für eine Pulverrückgewinnungsvorrichtung einer Pulverbeschichtungsanlage, wobei der Zyklonabscheider (1) Folgendes aufweist:
- einen Einlaufbereich (2) mit einem Einlass für einen Pulver-Luft-Gemischstrom;
- einen sich an dem unteren Endbereich des Einlaufbereichs (2) anschließenden Abscheidebereich (3) zur Fliehkraftabscheidung von zumindest einem Teil des im Gemischstrom enthaltenen Pulvers; und
- einen mit dem unteren Endbereich des Abscheidebereichs (3) verbundenen oder verbindbaren Pulversammelbereich (4) zum Sammeln des in dem Abscheidebereich (3) abgeschiedenen Pulvers,
wobei der Pulversammelbereich (4) relativ zu dem Abscheidebereich (3) zwischen einer ersten Position, in welcher der Pulversammelbereich (4) mit dem unteren Endbereich des Abscheidebereichs (3) insbesondere fluchtend verbunden ist, und einer zweiten Position überführbar ist, in welcher der Pulversammelbereich (4) nicht mit dem unteren Endbereich des Abscheidebereichs (3) insbesondere fluchtend verbunden ist, und in welchem über den unteren Endbereich des Abscheidebereichs (3) ein Zugang zum Inneren des Abscheidebereichs (3) und/oder Einlaufbereichs (2) des Zyklonabscheiders (1) möglich ist,
**dadurch gekennzeichnet, dass**
der Zyklonabscheider (1) ferner eine Beleuchtungsvorrichtung (6) mit mindestens einer Lichtquelle (7) aufweist, wobei die Beleuchtungsvorrichtung (6) ausgebildet ist, mit Hilfe der mindestens einen Lichtquelle (7) bedarfsweise zumindest Teilbereiche des Inneren des Abscheidebereichs (3) und/oder des Einlaufbereichs (2) des Zyklonabscheiders (1) zu beleuchten oder auszuleuchten, und zwar insbesondere dann, wenn sich der Pulversammelbereich (4) in seiner zweiten Position befindet.

2. Zyklonabscheider (1) nach Anspruch 1,
wobei die Beleuchtungsvorrichtung (6) ausgebildet ist, dass:
- die mindestens eine Lichtquelle (7) der Beleuchtungsvorrichtung (6) automatisch eingeschaltet wird und/oder manuell einschaltbar ist, wenn sich der Pulversammelbereich (4) in seiner zweiten Position befindet und/oder wenn der Pulversammelbereich (4) in seine zweite Position überführt wird; und/oder
- die mindestens eine Lichtquelle (7) der Beleuchtungsvorrichtung (6) automatisch ausgeschaltet wird und/oder manuell ausschaltbar ist, wenn sich der Pulversammelbereich (4) in seiner ersten Position befindet und/oder wenn der Pulversammelbereich (4) in seine erste Position überführt wird.

3. Zyklonabscheider (1) nach Anspruch 1 oder 2,
wobei die mindestens eine Lichtquelle (7) der Beleuchtungsvorrichtung (6) außerhalb des Abscheidebereichs (7) und des Einlaufbereichs (2) des Zyklonabscheiders (1) angeordnet ist, und vorzugsweise relativ zu dem Abscheidebereich (3) und dem Einlaufbereich (2) des Zyklonabscheiders (1) fest installiert ist, wobei die mindestens eine Lichtquelle (7) derart bezüglich des Abscheidebereichs (3) und des Einlaufbereichs (2) des Zyklonabscheiders (1) angeordnet und ausgerichtet ist, dass mindestens 50% und vorzugsweise mindestens 70% und noch bevorzugter mindestens 80% des von der mindestens einen Lichtquelle (7) der Beleuchtungsvorrichtung (6) emittierten Lichts in der zweiten Position des Pulversammelbereichs auf einen Innenwandbereich des Abscheidebereichs (3) und/oder des Einlaufbereichs (2) des Zyklonabscheiders (1) auftrifft; und/oder wobei die mindestens eine Lichtquelle (7) der Beleuchtungsvorrichtung innerhalb des Abscheidebereichs (3) oder des Einlaufbereichs (2) des Zyklonabscheiders (1) angeordnet ist, wobei die mindestens eine Lichtquelle (7) derart bezüglich des Abscheidebereichs (3) und des Einlaufbereichs (2) des Zyklonabscheiders (1) angeordnet und ausgerichtet ist, dass mindestens 50% und vorzugsweise mindestens 70% und noch bevorzugter mindestens 80% des von der mindestens einen Lichtquelle (7) der Beleuchtungsvorrichtung (6) emittierten Lichts auf einen Innenwandbereich des Abscheidebereichs (3) und/oder des Einlaufbereichs (2) des Zyklonabscheiders (1) auftrifft.

4. Zyklonabscheider (1) nach einem der Ansprüche 1 bis 3,
wobei die Beleuchtungsvorrichtung (6) relativ zu dem Abscheidebereich (3) zwischen einer ersten Position, in welcher mit der mindestens einen Lichtquelle (7) über den unteren Endbereich des Abscheidebereichs (3) zumindest teil- oder bereichsweise das Innere des Abscheidebereichs (3) und/oder Einlaufbereichs (2) des Zyklonabscheiders (1) be- oder ausleuchtbar ist, und einer zweiten Position überführbar ist, in welcher der Pulversammelbereich (4) in seiner ersten Position vorliegt und ein zumindest teil- oder bereichsweises Be- oder Ausleuchten des Inneren des Abscheidebereichs (3) und/oder Einlaufbereichs (2) des Zyklonabscheiders (1) mit Hilfe der mindestens einen Lichtquelle (7) verhindert ist.

5. Zyklonabscheider (1) nach Anspruch 4,
wobei die Beleuchtungsvorrichtung (6) ausgebildet ist, dass:
(i) die Beleuchtungsvorrichtung (6) nur dann von ihrer zweiten Position in ihre erste Position überführbar ist, wenn der Pulversammelbereich (4) in seiner ersten Position vorliegt; und/oder
(ii) die Beleuchtungsvorrichtung (6) selbstständig von ihrer ersten Position in ihre zweite Position überführt wird, wenn der Pulversammelbereich (4) von seiner zweiten Position in seine erste Position überführt wird; und/oder
(iii) die mindestens eine Lichtquelle (7) der Beleuchtungsvorrichtung (6) automatisch eingeschaltet wird und/oder manuell einschaltbar ist, wenn die Beleuchtungsvorrichtung (6) von ihrer zweiten Position in ihre erste Position überführt wird; und/oder
(iv) die mindestens eine Lichtquelle (7) der Beleuchtungsvorrichtung (6) automatisch ausgeschaltet wird und/oder manuell ausschaltbar ist, wenn die Beleuchtungsvorrichtung (6) von ihrer ersten Position in ihre zweite Position überführt wird.

6. Zyklonabscheider (1) nach einem der Ansprüche 1 bis 5,
wobei der Pulversammelbereich (4) in einer horizontalen Schwenkebene relativ zu dem Abscheidebereich (3) zwischen seiner ersten Position und seiner zweiten Position verschwenkbar ist, und wobei die Beleuchtungsvorrichtung (6) in einer horizontalen Schwenkebene relativ zu dem Abscheidebereich (3) zwischen ihrer ersten Position und ihrer zweiten Position verschwenkbar ist, wobei die horizontale Schwenkebene der Beleuchtungsvorrichtung (6) vorzugsweise mit der horizontalen Schwenkebene des Pulversammelbereichs (4) übereinstimmt oder vorzugsweise in insbesondere unmittelbarer Nähe der horizontalen Schwenkebene des Pulversammelbereichs (4) liegt.

7. Zyklonabscheider (1) nach einem der Ansprüche 1 bis 6,
wobei der Zyklonabscheider (1) ein Gestell (15) aufweist, über welches der Einlaufbereich (2) und/oder Abscheidebereich (3) des Zyklonabscheiders (1) zumindest teilweise getragen werden/wird, wobei der Pulversammelbereich (4) über eine erste Gelenkanordnung (10) an dem Gestell (15) schwenkbar gelagert ist, und wobei die Beleuchtungsvorrichtung (6) über eine von der ersten Gelenkanordnung separat ausgeführte zweite Gelenkanordnung (11) an dem Gestell (15) schwenkbar gelagert ist.

8. Zyklonabscheider (1) nach einem der Ansprüche 1 bis 7,
wobei der Zyklonabscheider (1) einen Anschlag (12) aufweist zum Definieren der ersten Position des Pulversammelbereichs (4) und zum Begrenzen einer Bewegung, insbesondere Schwenkbewegung, des Pulversammelbereichs (4) relativ zu dem Abscheidebereich (3), wenn der Pulversammelbereich (4) von seiner zweiten Position in seine erste Position überführt wird.

9. Zyklonabscheider (1) nach Anspruch 8,
wobei der Anschlag (12) eine vorzugsweise zumindest bereichsweise aus einem Elastomer und/oder magnetisierten Material gebildete Anschlagfläche (13) aufweist, die von einer insbesondere stegförmigen Halterung (14) gehalten wird, wobei die Beleuchtungsvorrichtung (6) eine insbesondere stegförmige Halterung (8) aufweist, wobei an einem ersten Endbereich der insbesondere stegförmigen Halterung (8) der Beleuchtungsvorrichtung (6) die mindestens eine Lichtquelle (7) vorgesehen ist, und wobei an dem zweiten Endbereich der insbesondere stegförmigen Halterung (8) der Beleuchtungsvorrichtung (6) ein mit der insbesondere stegförmigen Halterung (14) des Anschlags (12) verbundenes Scharniergelenk (11) ausgebildet ist.

10. Zyklonabscheider (1) nach Anspruch 9,
wobei an dem ersten Endbereich der insbesondere stegförmigen Halterung (8) der Beleuchtungsvorrichtung (6) ein Kantenschutz (9) ausgebildet ist, und wobei die Drehachse des Scharniergelenks (11) insbesondere an einer Außenkante der insbesondere stegförmigen Halterung (14) des Anschlags (12) anliegt.

11. Zyklonabscheider (1) nach einem der Ansprüche 1 bis 10,
wobei zumindest der untere Endbereich des Abscheidebereichs (3) kegelstumpfartig mit einer sich in Richtung des Pulversammelbereichs (4) verjüngenden, insbesondere konisch zulaufenden Mantelgeometrie ausgeführt ist, wobei der Pulversammelbereich (4) mit einer sich in Richtung eines am unteren Endbereich des Pulversammelbereichs (4) vorgesehenen Pulverauslasses insbesondere konisch verjüngenden Mantelgeometrie versehen ist, wobei in der ersten Position des Pulversammelbereichs (4) dieser relativ zu dem Abscheidebereich (3) in Längsrichtung des Zyklonabscheiders (1) vorzugsweise pneumatisch, hydraulisch, elektrisch oder manuell bewegbar ist, so dass eine Auslassöffnung des Abscheidebereichs (3) mit einer Einlassöffnung des Pulversammelbereichs (4) verbindbar ist.

12. Zyklonabscheider (1) nach einem der Ansprüche 1 bis 11,
wobei der Zyklonabscheider (1) ein in einem insbesondere zumindest bereichsweise zylinderförmigen Siebgehäuse gehaltenes Sieb aufweist, welches derart zwischen dem unteren Endbereich des Abscheidebereichs (3) und dem Pulversammelbereich (4) eingesetzt oder einsetzbar ist, dass die Öffnung am oberen Ende des insbesondere zylinderförmigen Siebgehäuses mit der Auslassöffnung am unteren Endbereich des Abscheidebereichs (3) und die Öffnung am unteren Ende des insbesondere zylinderförmigen Siebgehäuses mit der Einlassöffnung am oberen Ende des Pulversammelbereichs (4) übereinstimmt,
wobei das insbesondere zylinderförmige Siebgehäuse insbesondere über eine vorzugsweise horizontale Schwenkbewegung zwischen den unteren Endbereich des Abscheidebereichs (3) und den Pulversammelbereich (4) einschwenkbar ist.

13. Zyklonabscheider (1) nach einem der Ansprüche 1 bis 12,
wobei eine Fluidisiervorrichtung vorgesehen ist zum Fluidisieren von als Rückgewinnungspulver im Pulversammelbereich (4) gesammeltem Pulver.
wobei die Fluidisiervorrichtung vorzugsweise mindestens eine Fluidisierwand zwischen einer Wand des Pulversammelbereichs (4) und einer Fluidisierdruckluftkammer aufweist, und wobei die Fluidisierwand eine Vielzahl von offenen Poren oder Bohrungen aufweist, welche so klein sind, dass sie für Fluidisierluft durchlässig, jedoch für Pulverpartikel des Rückgewinnungspulvers undurchlässig sind, wobei die mindestens eine Fluidisierwand vorzugsweise mindestens einen Teil einer Wand bildet, welche den Pulversammelbereich (4) bildet.

14. Zyklonabscheider (1) nach einem der Ansprüche 1 bis 13,
wobei der Pulversammelbereich (4) an seinem unteren Ende einen Pulverauslass aufweist zum Abführen des in dem Pulversammelbereich (4) gesammelten Pulvers, und wobei der Pulverauslass mit einem Pulverauslassventil versehen ist, so dass, wenn das Pulverauslassventil geschlossen ist, im Pulversammelbereich (4) das in dem Abscheidebereich (3) abgeschiedene Pulver als Rückgewinnungspulver speicherbar ist, wobei das Pulverauslassventil vorzugsweise als Quetschventil ausgeführt ist; und/oder
wobei der Pulversammelbereich (4) mit mindestens einem Sensor versehen ist zum Detektieren von mindestens einem vorbestimmten Pulverniveau im Pulversammelbereich (4), wobei vorzugsweise ein Vibrator zum Erzeugen von mechanischen Vibrationen in dem Pulversammelbereich (4) vorgesehen ist.

15. Pulverrückgewinnungsvorrichtung für eine Pulverbeschichtungsanlage, wobei die Pulverrückgewinnungsvorrichtung einen Zyklonabscheider (1) nach einem der Ansprüche 1 bis 14 aufweist, welcher an dem unteren Ende des Pulversammelbereichs (4) einen Pulverauslass mit einem Pulverauslassventil aufweist zum Abführen des in dem Pulversammelbereich (4) gesammelten Pulvers, und wobei ferner eine Pulverpumpe stromabwärts des Pulverauslassventils in einem Pulverauslassweg vorgesehen ist zum Fördern von als Rückgewinnungspulver gesammeltem Pulver aus dem Pulversammelbereich (4).

## Claims

1. A cyclone separator (1), particularly for a powder recovery device of a powder coating system, wherein the cyclone separator (1) comprises the following:
- an inlet region (2) with an inlet for a mixed flow of powder/air;
- a separation region (3) adjoining the lower end region of the inlet region (2) for the centrifugal separation of at least a portion of the powder contained in the mixed flow; and
- a powder collecting region (4) connected or connectable to the lower end region of the separation region (3) for collecting the powder separated in the separation region (3),
wherein the powder collecting region (4) is shiftable relative to the separation region (3) between a first position in which the powder collecting region (4) is in particular aligned in flush connection with the lower end region of the separation region (3) and a second position in which the powder collecting region (4) is in particular not aligned in flush connection with the lower end region of the separation region (3) and in which access to the interior of the separation region (3) and/or inlet region (2) of the cyclone separator (1) is possible via the lower end region of the separation region (3),
**characterized in that**
the cyclone separator (1) further comprises an illuminating device (6) with at least one light source (7), wherein the illuminating device (6) is designed to illuminate or light up at least sections of the interior of the separation region (3) and/or the inlet region (2) of the cyclone separator (1) as needed with the at least one light source (7), and that particularly when the powder collecting region (4) is in its second position.

2. The cyclone separator (1) according to claim 1,
wherein the illuminating device (6) is designed such that:
- the at least one light source (7) of the illuminating device (6) switches on automatically and/or can be switched on manually when the powder collecting region (4) is in its second position and/or when the powder collecting region (4) shifts into its second position; and/or
- the at least one light source (7) of the illuminating device (6) switches off automatically and/or can be switched off manually when the powder collecting region (4) is in its first position and/or when the powder collecting region (4) shifts into its first position.

3. The cyclone separator (1) according to claim 1 or 2,
wherein the at least one light source (7) of the illuminating device (6) is arranged outside of the separation region (7) and the inlet region (2) of the cyclone separator (1), and preferably fixedly installed relative to the separation region (3) and the inlet region (2) of the cyclone separator (1), wherein the at least one light source (7) is arranged and aligned relative to the separation region (3) and the inlet region (2) of the cyclone separator (1) such that at least 50% and preferably at least 70% and even more preferentially at least 80% of the light emitted by the at least one light source (7) of the illuminating device (6) strikes an interior wall area of the separation region (3) and/or the inlet region (2) of the cyclone separator (1) in the second position of the powder collecting region; and/or
wherein the at least one light source (7) of the illuminating device is arranged within the separation region (3) or the inlet region (2) of the cyclone separator (1), wherein the at least one light source (7) is arranged and aligned relative to the separation region (3) and the inlet region (2) of the cyclone separator (1) such that at least 50% and preferably at least 70% and even more preferentially at least 80% of the light emitted by the at least one light source (7) of the illuminating device (6) strikes an interior wall area of the separation region (3) and/or the inlet region (2) of the cyclone separator (1).

4. The cyclone separator (1) according to one of claims 1 to 3,
wherein the illuminating device (6) is shiftable relative to the separation region (3) between a first position, in which the at least one light source (7) can illuminate or light at least part or areas of the interior of the separation region (3) and/or inlet region (2) of the cyclone separator (1) via the lower end region of the separation region (3), and a second position in which the powder collecting region (4) is in its first position and lighting or illuminating of at least part or areas of the interior of the separation region (3) and/or inlet region (2) of the cyclone separator (1) via the at least one light source (7) is prevented.

5. The cyclone separator (1) according to claim 4,
wherein the illuminating device (6) is designed such that:
(i) the illuminating device (6) is only shiftable from its second position into its first position when the powder collecting region (4) is in its first position; and/or
(ii) the illuminating device (6) independently shifts from its first position to its second position when the powder collecting region (4) is shifted from its second position to its first position; and/or
(iii) the at least one light source (7) of the illuminating device (6) is automatically switched on and/or can be manually switched on when the illuminating device (6) shifts from its second position to its first position; and/or
(iv) the at least one light source (7) of the illuminating device (6) is automatically switched off and/or can be manually switched off when the illuminating device (6) shifts from its first position into its second position.

6. The cyclone separator (1) according to one of claims 1 to 5,
wherein the powder collecting region (4) is pivotable between its first position and its second position in a horizontal pivot plane relative to the separation region (3), and wherein the illuminating device (6) is pivotable between its first position and its second position in a horizontal pivot plane relative to the separation region (3), wherein the horizontal pivot plane of the illuminating device (6) preferably coincides with the horizontal pivot plane of the powder collecting region (4) or is preferably in the immediate proximity of the horizontal pivot plane of the powder collecting region (4).

7. The cyclone separator (1) according to one of claims 1 to 6,
wherein the cyclone separator (1) comprises a support frame (15) via which the inlet region (2) and/or separation region (3) of the cyclone separator (1) is/are at least partially supported, wherein the powder collecting region (4) is pivotably mounted to the support frame (15) via a first joint assembly (10), and wherein the illuminating device (6) is pivotably mounted to the support frame (15) via a second joint assembly (11) separate from the first joint assembly.

8. The cyclone separator (1) according to one of claims 1 to 7,
wherein the cyclone separator (1) comprises a limit stop (12) for defining the first position of the powder collecting region (4) and limiting a movement, in particular pivoting movement, of the powder collecting region (4) relative to the separation region (3) when the powder collecting region (4) shifts from its second position into its first position.

9. The cyclone separator (1) according to claim 8,
wherein the limit stop (12) has a locating surface (13) preferably at least partially formed from an elastomer and/or magnetized material which is held by an in particular bar-shaped mount (14), wherein the illuminating device (6) exhibits an in particular bar-shaped mount (8), wherein the at least one light source (7) is provided at a first end region of the in particular bar-shaped mount (8) of the illuminating device (6), and wherein a hinge joint (11) connected to the in particular bar-shaped mount (14) of the limit stop (12) is formed on the second end region of the in particular bar-shaped mount (8) of the illuminating device (6).

10. The cyclone separator (1) according to claim 9,
wherein an edge protector (9) is formed on the first end region of the in particular bar-shaped mount (8) of the illuminating device (6), and wherein the rotational axis of the hinge joint (11) lies in particular on an outer edge of the in particular bar-shaped mount (14) of the limit stop (12).

11. The cyclone separator (1) according to one of claims 1 to 10,
wherein at least the lower end region of the separation region (3) is frustoconical with a shell geometry that tapers, in particular conically tapers, toward the powder collecting region (4), wherein the powder collecting region (4) is provided with a shell geometry which tapers in particular conically toward a powder outlet at the lower end region of the powder collecting region (4), wherein in the first position of the powder collecting region (4), same is preferably pneumatically, hydraulically, electrically or manually movable in the longitudinal direction of the cyclone separator (1) relative to the separation region (3) such that an outlet opening of the separation region (3) is connectable to an inlet opening of the powder collecting region (4).

12. The cyclone separator (1) according to one of claims 1 to 11,
wherein the cyclone separator (1) comprises a sieve held in a sieve housing of particularly at least partly cylindrical design which is inserted or insertable between the lower end region of the separation region (3) and the powder collecting region (4) such that the opening at the upper end of the in particular cylindrical sieve housing coincides with the outlet opening at the lower end region of the separation region (3) and the opening at the lower end of the in particular cylindrical sieve housing coincides with the inlet opening at the upper end of the powder collecting region (4),
wherein the in particular cylindrical sieve housing is in particular pivotable between the lower end region of the separation region (3) and the powder collecting region (4) by means of a preferably horizontal pivoting motion.

13. The cyclone separator (1) according to one of claims 1 to 12,
wherein a fluidizing device is provided for fluidizing powder collected as recovery powder in the powder collecting region (4),
wherein the fluidizing device preferably comprises at least one fluidizing wall between a wall of the powder collecting region (4) and a fluidizing compressed air chamber, and wherein the fluidizing wall exhibits a plurality of open pores or holes which are so small as to be permeable to fluidizing air yet impermeable to powder particles of the recovery powder, wherein the at least one fluidizing wall preferably forms at least one section of a wall forming the powder collecting region (4).

14. The cyclone separator (1) according to one of claims 1 to 13,
wherein the powder collecting region (4) has a powder outlet at its lower end for discharging the powder collected in the powder collecting region (4), and wherein the powder outlet is provided with a powder outlet valve so that the powder separated within the separation region (3) can be stored in the powder collecting region (4) as recovery powder when the powder outlet valve is closed, wherein the powder outlet valve is preferably realized as a pinch valve; and/or
wherein the powder collecting region (4) is provided with at least one sensor for detecting at least one predetermined powder level in the powder collecting region (4), wherein a vibrator is preferably provided for generating mechanical vibrations in the powder collecting region (4).

15. A powder recovery device for a powder coating system, wherein the powder recovery device comprises a cyclone separator (1) according to one of claims 1 to 14 which has a powder outlet with a powder outlet valve at the lower end of the powder collecting region (4) for discharging the powder collected in the powder collecting region (4), and wherein a powder pump is further provided in a powder outlet path downstream of the powder outlet valve for conveying the powder collected as recovery powder out of the powder collecting region (4).

## Revendications

1. Séparateur cyclonique (1) en particulier pour un dispositif de récupération de poudre d'une installation de revêtement par poudre, dans lequel le séparateur cyclonique (1) présente :
- une zone d'entrée (2) comprenant une entrée pour un flux de mélange poudre/air ;
- une zone de séparation (3) adjacente à la zone d'extrémité inférieure de la zone d'entrée (2), destinée à séparer par force centrifuge au moins une partie de la poudre contenue dans le flux de mélange ; et
- une zone de collecte de poudre (4) reliée ou pouvant être reliée à la zone d'extrémité inférieure de la zone de séparation (3), destinée à collecter la poudre séparée dans la zone de séparation (3),
dans lequel une zone de collecte de poudre (4) peut être amenée relativement à la zone de séparation (3) entre une première position à laquelle la zone de collecte de poudre (4) est reliée en particulier en affleurement avec la zone d'extrémité inférieure de la zone de séparation (3), et une deuxième position à laquelle la zone de collecte de poudre (4) n'est pas reliée en particulier en affleurement avec la zone d'extrémité inférieure de la zone de séparation (3), et dans laquelle un accès à l'intérieur de la zone de séparation (3) et/ou à la zone d'entrée (2) du séparateur cyclonique (1) est possible par l'intermédiaire de la zone d'extrémité inférieure de la zone de séparation (1),
**caractérisé en ce que**
le séparateur cyclonique (1) présente en outre un dispositif d'éclairage (6) comprenant au moins une source de lumière (7), le dispositif d'éclairage (6) étant réalisé pour éclairer ou illuminer, à l'aide d'au moins une source de lumière (7), si nécessaire, au moins des zones partielles de l'intérieur de la zone de séparation (3) et/ou de la zone d'entrée (2) du séparateur cyclonique (1), et ce, en particulier lorsque la zone de collecte de poudre (4) se trouve dans sa deuxième position.

2. Séparateur cyclonique (1) selon la revendication 1,
dans lequel le dispositif d'éclairage (6) est réalisé de telle sorte que :
- ladite au moins une source de lumière (7) du dispositif d'éclairage (6) est activée automatiquement et/ou peut être activée manuellement quand la zone de collecte de poudre (4) se trouve dans sa deuxième position et/ou quand la zone de collecte de poudre (4) est amenée dans sa deuxième position ; et/ou
- ladite au moins une source de lumière (7) du dispositif d'éclairage (6) est désactivée automatiquement et/ou peut être désactivée manuellement quand la zone de collecte de poudre (4) se trouve dans sa première position et/ou quand la zone de collecte de poudre (4) est amenée dans sa première position.

3. Séparateur cyclonique (1) selon la revendication 1 ou 2,
dans lequel ladite au moins une source de lumière (7) du dispositif d'éclairage (6) est agencée à l'extérieur de la zone de séparation (3) et de la zone d'entrée (2) du séparateur cyclonique (1), et de préférence est installée et orientée de manière fixe relativement à la zone de séparation (3) et à la zone d'entrée (2) du séparateur cyclonique (1) de telle sorte qu'au moins 50 % et de préférence au moins 70 % et de manière encore préférée au moins 80 % d'une lumière émise de ladite au moins une source de lumière (7) du dispositif d'éclairage (6), dans la deuxième position de la zone de collecte de poudre, tombe sur une zone de paroi intérieure de la zone de séparation (3) et/ou de la zone d'entrée (2) du séparateur cyclonique (1) ; et/ou
dans lequel ladite au moins une source de lumière (7) du dispositif d'éclairage est agencée à l'intérieur de la zone de séparation (3) ou de la zone d'entrée (2) du séparateur cyclonique (1), ladite au moins une source de lumière (7) étant agencée et orientée par rapport à la zone de séparation (3) et de la zone d'entrée (2) du séparateur cyclonique (1) de telle sorte qu'au moins 50 % et de préférence au moins 70 % et de manière encore préférée au moins 80 % de la lumière émise depuis ladite au moins une source de lumière (7) du dispositif d'éclairage (6) tombe sur une zone de paroi intérieure de la zone de séparation (3) et/ou de la zone d'entrée (2) du séparateur cyclonique (1).

4. Séparateur cyclonique (1) selon l'une des revendications 1 à 3, dans lequel le dispositif d'éclairage (6) peut être amené relativement à la zone de séparation (3) entre une première position à laquelle l'intérieur de la zone de séparation (3) et/ou de la zone d'entrée (2) du séparateur cyclonique (1) peut être éclairé ou illuminé au moins en partie ou localement à l'aide de ladite au moins une source de lumière (7) au-dessus de la zone d'extrémité inférieure de la zone de séparation (3), et une deuxième position à laquelle la zone de collecte de poudre (4) se trouve dans sa première position et un éclairage ou une illumination, au moins partiel(le) ou local(e), de l'intérieur de la zone de séparation (3) et/ou de la zone d'entrée (2) du séparateur cyclonique (1) est empêché(e) à l'aide de ladite au moins une source de lumière (7).

5. Séparateur cyclonique (1) selon la revendication 4,
dans lequel le dispositif d'éclairage (6) est réalisé de telle sorte que :
(i) le dispositif d'éclairage (6) est amené uniquement de sa deuxième position dans sa première position quand la zone de collecte de poudre (4) se trouve dans sa première position ; et/ou
(ii) le dispositif d'éclairage (6) est amené de manière autonome depuis sa première position dans sa deuxième position quand la zone de collecte de poudre (4) est amenée de sa deuxième position dans sa première position ; et/ou
(iii) ladite au moins une source de lumière (7) du dispositif d'éclairage (6) est activée automatiquement et/ou peut être activée manuellement quand le dispositif d'éclairage (6) est amené de sa deuxième position dans sa première position ; et/ou
(iv) ladite au moins une source de lumière (7) du dispositif d'éclairage (6) est désactivée automatiquement et/ou peut être désactivée manuellement quand le dispositif d'éclairage (6) est amené de sa première position dans sa deuxième position.

6. Séparateur cyclonique (1) selon l'une des revendications 1 à 5, dans lequel la zone de collecte de poudre (4) peut être pivotée dans un plan de pivotement horizontal relativement à la zone de séparation (3) entre sa première position et sa deuxième position, et dans lequel le dispositif d'éclairage (6) peut être pivoté dans un plan de pivotement horizontal relativement à la zone de séparation (3) entre sa première position et sa deuxième position, le plan de pivotement horizontal du dispositif d'éclairage (6) correspondant de préférence au plan de pivotement horizontal de la zone de collecte de poudre (4) ou de préférence se trouvant en particulier à proximité immédiate du plan de pivotement horizontal de la zone de collecte de poudre (4).

7. Séparateur cyclonique (1) selon l'une des revendications 1 à 6, dans lequel le séparateur cyclonique (1) présente un châssis (15) par l'intermédiaire duquel la zone d'entrée (2) et/ou la zone de séparation (3) du séparateur cyclonique (1) sont portées au moins en partie, dans lequel la zone de collecte de poudre (4) est montée de manière pivotante au niveau du châssis (15) par l'intermédiaire d'un premier agencement d'articulations (10), et dans lequel le dispositif d'éclairage (6) est monté de manière pivotante au niveau du châssis (15) par l'intermédiaire d'un deuxième agencement d'articulations (11) réalisé de manière distincte par rapport au premier agencement d'articulations.

8. Séparateur cyclonique (1) selon l'une des revendications 1 à 7, dans lequel le séparateur cyclonique (1) présente une butée (12) pour définir la première position de la zone de collecte de poudre (4) et pour limiter un déplacement, en particulier un déplacement de pivotement, de la zone de collecte de poudre (4) relativement à la zone de séparation (3) quand la zone de collecte de poudre (4) est amenée de sa deuxième position dans sa première position.

9. Séparateur cyclonique (1) selon la revendication 8,
dans lequel la butée (12) présente une surface de butée, (13) réalisée de préférence au moins localement en élastomère et/ou en un matériau aimanté, qui est tenue par un support (14) en particulier en forme de barre, dans lequel le dispositif d'éclairage (6) présente un support en particulier en forme de barre (8), dans lequel ladite au moins une source de lumière (7) est prévue au niveau d'une première zone d'extrémité du support (8) en particulier en forme de barre du dispositif d'éclairage (6), et dans lequel une articulation en charnière (11), reliée au support (14) en particulier en forme de barre de la butée (12), est réalisé au niveau de la deuxième zone d'extrémité du support (8) en particulier en forme de barre du dispositif d'éclairage (6).

10. Séparateur cyclonique (1) selon la revendication 9,
dans lequel une protection de bord (9) est réalisée au niveau de la première zone d'extrémité du support (8) en particulier en forme de barre du dispositif d'éclairage (6), et dans lequel l'axe de rotation de l'articulation en charnière (11) repose en particulier au niveau d'un bord extérieur du support (14) en particulier en forme de barre de la butée (12).

11. Séparateur cyclonique (1) selon l'une des revendications 1 à 10, dans lequel au moins la zone d'extrémité inférieure de la zone de séparation (3) est configurée de manière tronconique avec une géométrie de surface d'enveloppe s'étendant en se rétrécissant, en particulier de manière conique, en direction de la zone de collecte de poudre (4), dans lequel la zone de collecte de poudre (4) est dotée d'une géométrie de surface d'enveloppe se rétrécissant, en particulier de manière conique, en direction d'une sortie de poudre prévue au niveau d'une zone d'extrémité inférieure de la zone de collecte de poudre (4), dans lequel, dans la première position de la zone de collecte de poudre (4), celle-ci peut être déplacée de préférence de manière pneumatique, hydraulique, électrique ou manuelle relativement à la zone de séparation (3) en direction longitudinale du séparateur cyclonique (1) de telle sorte qu'une ouverture de sortie de la zone de séparation (3) peut être reliée à une ouverture d'entrée de la zone de collecte de poudre (4).

12. Séparateur cyclonique (1) selon l'une des revendications 1 à 11, dans lequel le séparateur cyclonique (1) présente un tamis, maintenu dans un boîtier à tamis en particulier au moins localement en forme de cylindre, qui est inséré ou peut être inséré entre la zone d'extrémité inférieure de la zone de séparation (3) et la zone de collecte de poudre (4) de telle sorte que l'ouverture au niveau de l'extrémité supérieure du boîtier à tamis en particulier en forme de cylindre correspond à l'ouverture de sortie au niveau de la zone d'extrémité inférieure de la zone de séparation (3), et l'ouverture au niveau de l'extrémité inférieure du boîtier à tamis en particulier en forme de cylindre correspond à l'ouverture d'entrée au niveau de l'extrémité supérieure de la zone de collecte de poudre (4), dans lequel le boîtier à tamis en particulier en forme de cylindre peut être rentré de manière pivotante, en particulier par l'intermédiaire d'un déplacement de pivotement de préférence horizontal, entre la zone d'extrémité inférieure de la zone de séparation (3) et la zone de collecte de poudre (4).

13. Séparateur cyclonique (1) selon l'une des revendications 1 à 12, dans lequel il est prévu un dispositif de fluidisation destiné à fluidiser une poudre collectée dans la zone de collecte de poudre (4) à titre de poudre de récupération,
dans lequel le dispositif de fluidisation présente de préférence au moins une paroi de fluidisation entre une paroi de la zone de collecte de poudre (4) et une chambre à air comprimé de fluidisation, et dans lequel la paroi de fluidisation présente une pluralité de pores ou perçages ouverts qui sont d'une si petite taille qu'ils laissent passer de l'air de fluidisation mais ne laissent pas passer des particules pulvérulentes de la poudre de récupération, dans lequel ladite au moins une paroi de fluidisation forme de préférence au moins une partie d'une paroi qui forme la zone de collecte de poudre (4).

14. Séparateur cyclonique (1) selon l'une des revendications 1 à 13, dans lequel la zone de collecte de poudre (4) présente au niveau de son extrémité inférieure une sortie de poudre destinée à évacuer la poudre collectée dans la zone de collecte de poudre (4), et dans lequel la sortie de poudre est munie d'une vanne de sortie de poudre de telle sorte que, quand la vanne de sortie de poudre est fermée, la poudre séparée dans la zone de séparation (3) peut être accumulée à titre de poudre de récupération dans la zone de collecte de poudre (4), dans lequel la vanne de sortie de poudre est configurée de préférence comme vanne à écrasement ; et/ou
dans lequel la zone de collecte de poudre (4) est munie d'au moins un capteur destiné à détecter au moins un niveau de poudre prédéterminé dans la zone de collecte de poudre (4), dans lequel il est prévu de préférence un vibreur destiné à générer des vibrations mécaniques dans la zone de collecte de poudre (4).

15. Dispositif de récupération de poudre pour une installation de revêtement par poudre, le dispositif de récupération de poudre comprenant un séparateur cyclonique (1) selon l'une des revendications 1 à 14, qui présente, au niveau de l'extrémité inférieure de la zone de collecte de poudre (4), une sortie de poudre comprenant une vanne de sortie de poudre destinée à évacuer la poudre collectée dans la zone de collecte de poudre (4), et dans lequel il est prévu en outre une pompe à poudre en amont de la vanne de sortie de poudre dans un trajet de sortie de poudre pour acheminer une poudre collectée à titre de poudre de récupération hors de la zone de collecte de poudre (4).
